(19) Europäisches Patentamt / European Patent Office / Office européen des brevets

(11) **EP 3 879 370 B1**

(12) **EUROPEAN PATENT SPECIFICATION**

(45) Date of publication and mention
of the grant of the patent:
**21.12.2022 Bulletin 2022/51**

(21) Application number: **18942235.5**

(22) Date of filing: **05.12.2018**

(51) International Patent Classification (IPC):
**G05B 23/02** *(2006.01)*

(52) Cooperative Patent Classification (CPC):
**G05B 23/024; G06N 20/00;** G05B 2219/24042

(86) International application number:
**PCT/JP2018/044643**

(87) International publication number:
**WO 2020/115827 (11.06.2020 Gazette 2020/24)**

(54) **ABNORMALITY DETECTION DEVICE AND ABNORMALITY DETECTION METHOD**

ANOMALIEDETEKTIONSVORRICHTUNG UND ANOMALIEDETEKTIONSVERFAHREN

DISPOSITIF DE DÉTECTION D'ANOMALIE ET PROCÉDÉ DE DÉTECTION D'ANOMALIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.09.2021 Bulletin 2021/37**

(73) Proprietor: **Mitsubishi Electric Corporation
Tokyo 100-8310 (JP)**

(72) Inventor: **NAKAMURA, Takaaki
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**WO-A1-2014/041971    WO-A1-2018/207350
WO-A1-2018/207350    JP-A- 2016 128 973
US-A1- 2012 078 670    US-A1- 2012 290 879**

**Description**

TECHNICAL FIELD

The present invention relates to an abnormality detection device and an abnormality detection method for determining whether or not equipment is operating abnormally.

BACKGROUND ART

A conventional abnormality detection method for detecting abnormality of equipment compares abnormality detection time-series data indicating states of equipment at a plurality of times in time series with time-series data at normal time collected when the equipment is operating normally.

The conventional abnormality detection method detects abnormality of equipment by detecting time-series data of a part whose behavior is different from that of time-series data at normal time (hereinafter, referred to as "subsequence data") from among pieces of abnormality detection time-series data.

However, the subsequence data is time-series data in a time period in which abnormality may have occurred in the equipment, but abnormality has not necessarily occurred in the equipment, and the equipment may be operating normally.

The following Patent Literature 1 discloses an abnormality detection system for detecting abnormality of equipment by combining a conventional abnormality detection method and a method for analyzing event information in order to avoid occurrence of an erroneous determination indicating that abnormality has occurred in the equipment when the equipment is operating normally.

Examples of the event information include information indicating an event related to operation of equipment by a worker and information indicating an event related to replacement of parts of the equipment.

The abnormality detection system disclosed in Patent Literature 1 determines that no abnormality has occurred in equipment even when detecting subsequence data as long as the detected subsequence data is synchronized with an event indicated by event information.

Document WO 2018/207350 A1 discloses an abnormality detection device and method, wherein reference waveforms e.g. event condition, event information are generated by extracting event related waveforms from learning time-series data and classifying the waveforms by using calculated co-occurrence degree. An abnormality detection is performed by comparing outlier data extracted from time-series data during run-time with reference waveforms corresponding to the time-series data.

CITATION LIST

PATENT LITERATURE

Patent Literature 1: JP 2013-218725 A

SUMMARY OF INVENTION

TECHNICAL PROBLEM

The abnormality detection system disclosed in Patent Literature 1 needs to hold event information in advance.

In a case where the abnormality detection system disclosed in Patent Literature 1 cannot prepare event information in advance, when the abnormality detection system detects subsequence data while equipment is operating normally, the abnormality detection system erroneously determines that abnormality has occurred in the equipment disadvantageously.

The present invention has been achieved in order to solve the above-described problem, and an object of the present invention is to obtain an abnormality detection device and an abnormality detection method capable of avoiding occurrence of an erroneous determination indicating that abnormality has occurred in equipment without preparing event information in advance.

SOLUTION TO PROBLEM

An abnormality detection device according to the present invention includes: an outlier score calculating unit for calculating, from abnormality detection time-series data indicating states of equipment which is an abnormality detection target at a plurality of times in time series, the degree of abnormality of the equipment at each of the plurality of times as an abnormality detection outlier score; an outlier data extracting unit for extracting, from among pieces of the abnormality detection time-series data, a piece of abnormality detection time-series data in a time period in which an abnormality may have occurred in the equipment as abnormality detection outlier data on the basis of the abnormality detection outlier score at each of the plurality of times calculated by the outlier score calculating unit; and an abnormality determining unit for collating a waveform of the abnormality detection outlier data extracted by the outlier data extracting unit with a waveform condition for determining that a waveform indicating a change in the abnormality detection outlier data is a waveform obtained when the equipment is operating normally, and determining whether or not the equipment is operating abnormally on the basis of a collation result between the waveform condition and the waveform of the abnormality detection outlier data, the abnormality determining unit includes: a type determining unit for calculating a feature amount of the abnormality detection outlier data extracted by the outlier data extracting unit and determining a waveform type of the abnormality detection outlier data from the feature amount; a waveform condition selecting unit for selecting a waveform condition corresponding to the type determined by the type determining unit from among one or more waveform conditions; and an abnormality determination processing unit for collating the waveform condition selected by the waveform condition selecting unit with the waveform of the abnormality detection outlier data, and determining whether or not the equipment is operating abnormally on a basis of a collation result between the selected waveform condition and the waveform of the abnormality detection outlier data, the outlier score calculating unit is configured to calculate, from each of one or more pieces of learning time-series data indicating states of the equipment at a plurality of times when the equipment is operating normally in time series, a degree of abnormality of the equipment at each of the plurality of times as a learning outlier score, the outlier data extracting unit is configured to extract, from among the pieces of learning time-series data, learning time-series data in a time period in which an abnormality may have occurred in the equipment as learning outlier data on a basis of the learning outlier score at each of the plurality of times calculated by the outlier score calculating unit; the type determining unit is configured to calculate a feature amount of each of the pieces of learning outlier data extracted by the outlier data extracting unit, and to determine a waveform type of each of the pieces of learning outlier data from the feature amount of each of the pieces of learning outlier data, and the abnormality detection device further comprises a waveform condition generating unit for generating, from among waveforms of one or more pieces of learning outlier data whose waveforms have been determined to be of the same type by the type determining unit out of the pieces of learning outlier data extracted by the outlier data extracting unit, a waveform condition corresponding to the type.

ADVANTAGEOUS EFFECTS OF INVENTION

According to the present invention, the abnormality detection device is configured in such a manner that the abnormality determining unit collates a waveform of the abnormality detection outlier data extracted by the outlier data extracting unit with a waveform condition for determining that a waveform indicating a change in the abnormality detection outlier data is a waveform obtained when the equipment is operating normally, and determines whether or not the equipment is operating abnormally on the basis of a collation result between the waveform condition and the waveform of the abnormality detection outlier data. Therefore, the abnormality detection device according to the present invention can avoid occurrence of erroneous determination indicating that an abnormality has occurred in the equipment without preparing event information in advance.

BRIEF DESCRIPTION OF DRAWINGS

FIG. 1 is a configuration diagram illustrating an abnormality detection device according to a first embodiment.
FIG. 2 is a hardware configuration diagram illustrating hardware of the abnormality detection device according to the first embodiment.
FIG. 3 is a hardware configuration diagram of a computer when an abnormality detection device is achieved by software, firmware, or the like.
FIG. 4 is a flowchart illustrating a processing procedure during learning in the abnormality detection device.
FIG. 5 is a flowchart illustrating an abnormality detection method which is a processing procedure during abnormality detection in the abnormality detection device.
FIG. 6A is an explanatory diagram illustrating an example of learning time-series data $D_{G,n,t}$, and FIG. 6B is an explanatory diagram illustrating examples of a learning outlier score $S_{G,n,t}$ and a threshold $S_{th}$.

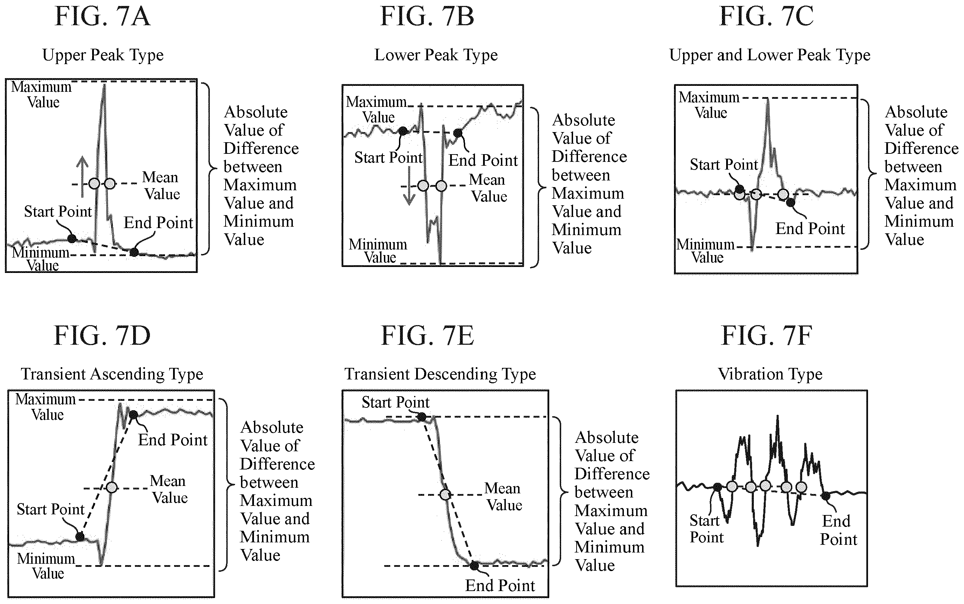

FIG. 7A is an explanatory diagram illustrating an example of a waveform of learning outlier data $OD_{G,n,ts\text{-}te}$ when the waveform type is "upper peak type", FIG. 7B is an explanatory diagram illustrating an example of a waveform of learning outlier data $OD_{G,n,ts\text{-}te}$ when the waveform type is "lower peak type", FIG. 7C is an explanatory diagram illustrating an example of a waveform of learning outlier data $OD_{G,n,ts\text{-}te}$ when the waveform type is "upper and lower peak type", FIG. 7D is an explanatory diagram illustrating an example of a waveform of learning outlier data $OD_{G,n,ts-te}$ when the waveform type is "transient ascending type", FIG. 7E is an explanatory diagram illustrating an example of a waveform of learning outlier data $OD_{G,n,ts-te}$ when the waveform type is "transient descending type", and FIG. 7F is an explanatory diagram illustrating an example of a waveform of learning outlier data $OD_{G,n,ts-te}$ when the waveform type is "vibration type".

FIG. 8 is an explanatory diagram illustrating an example of a feature amount $C_{G,n}$ of learning outlier data $OD_{G,n,ts-te}$.

FIG. 9A is an explanatory diagram illustrating N (N = 12) pieces of learning outlier data $OD_{G,n,ts-te}$ having a waveform type of "upper peak type", and FIG. 9B is an explanatory diagram illustrating a mean value $P_{mean}$ [t] of the N pieces of learning outlier data $OD_{G,n,ts-te}$, and an upper limit value $B_{upper}$ [t] and a lower limit value $B_{lower}$ [t] of a normal range indicated by a band model.

FIG. 10A is an explanatory diagram illustrating a waveform of abnormality detection outlier data $OD_{U,ts'-te}$, when an abnormality determination processing unit 11 determines that equipment is operating normally, and FIG. 10B is an explanatory diagram illustrating a waveform of abnormality detection outlier data $OD_{U,ts'-te}$, when the abnormality determination processing unit 11 determines that the equipment is operating abnormally.

FIG. 11 is an explanatory diagram illustrating an example of a histogram generated by a waveform condition generation processing unit 14.

FIG. 12 is a configuration diagram illustrating an abnormality detection device according to a third embodiment.

FIG. 13 is a hardware configuration diagram illustrating hardware of the abnormality detection device according to the third embodiment.

FIG. 14 is an explanatory diagram illustrating a list confirmation screen displaying a list of one or more waveform conditions $Wp$ generated by the waveform condition generation processing unit 14.

FIG. 15 is an explanatory diagram illustrating a list confirmation screen displaying a list of pieces of learning outlier data $OD_{G,n,ts-te}$ from which a waveform conditions $Wp$ has been generated.

FIG. 16 is a configuration diagram illustrating an abnormality detection device according to a fourth embodiment.

FIG. 17 is a hardware configuration diagram illustrating hardware of the abnormality detection device according to the fourth embodiment.

FIG. 18 is an explanatory diagram illustrating an example of a data display screen displaying pieces of abnormality detection outlier data $OD_{U,ts'-te}$, collated with waveform conditions $Wp$ and pieces of abnormality detection time-series data $Du,t$ when the abnormality determination processing unit 11 determines that equipment is operating abnormally.

## DESCRIPTION OF EMBODIMENTS

Hereinafter, in order to describe the present invention in more detail, embodiments for performing the present invention will be described by referring to the attached drawings.

First Embodiment.

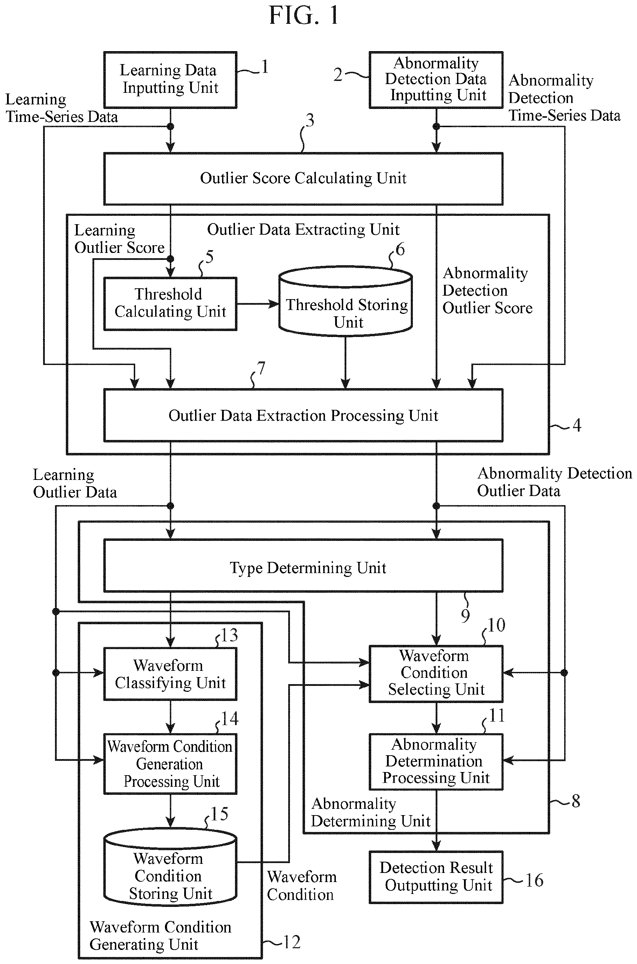

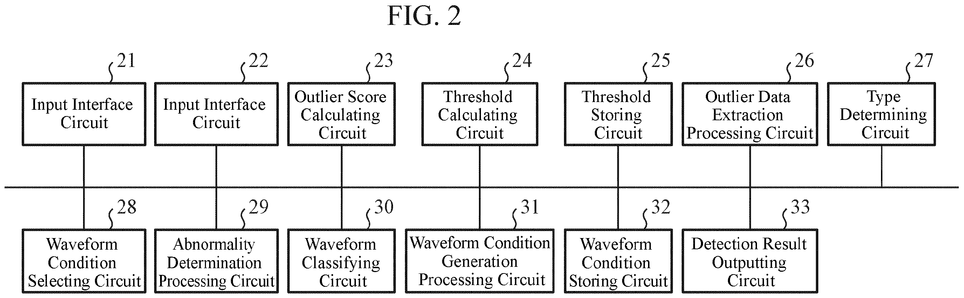

FIG. 1 is a configuration diagram illustrating an abnormality detection device according to a first embodiment. FIG. 2 is a hardware configuration diagram illustrating hardware of the abnormality detection device according to the first embodiment.

In FIGS. 1 and 2, a learning data inputting unit 1 is achieved by, for example, an input interface circuit 21 illustrated in FIG. 2.

The learning data inputting unit 1 receives input of $N$ pieces of learning time-series data $D_{G,n,t}$ (n = 1, 2,..., N) indicating states of equipment which is an abnormality detection target at a plurality of times $t$ in time series when the equipment is operating normally. N is an integer equal to or more than 1.

The learning time-series data $D_{G,n,t}$ includes an observed value of a sensor at each time t, and the observed value of the sensor indicates a state of the equipment.

The learning data inputting unit 1 outputs the received learning time-series data $D_{G,n,t}$ to each of an outlier score calculating unit 3 and an outlier data extraction processing unit 7.

As the equipment which is an abnormality detection target, equipment such as a power plant, a chemical plant, or a water and sewage plant is conceivable. In addition, as the equipment which is an abnormality detection target, air conditioning equipment, electrical equipment, lighting equipment, water supply and drainage equipment, or the like in an office building or a factory is conceivable. In addition, equipment such as a conveyor constituting a production line of a factory, equipment installed in an automobile, or equipment installed in a railway vehicle is conceivable. Furthermore, as the equipment which is an abnormality detection target, equipment of an information system related to economy or equipment of an information system related to management is also conceivable.

An abnormality detection data inputting unit 2 is achieved by, for example, an input interface circuit 22 illustrated in FIG. 2.

The abnormality detection data inputting unit 2 receives input of abnormality detection time-series data $D_{U,t}$ indicating states of equipment which is an abnormality detection target at a plurality of times $t$ in time series.

The abnormality detection time-series data $D_{U,t}$ includes an observed value of a sensor at each time $t$, and the observed value of the sensor indicates a state of the equipment.

The abnormality detection data inputting unit 2 outputs the received abnormality detection time-series data $D_{U,t}$ to each of the outlier score calculating unit 3 and the outlier data extraction processing unit 7.

The outlier score calculating unit 3 is achieved by, for example, an outlier score calculating circuit 23 illustrated in FIG. 2.

The outlier score calculating unit 3 calculates the degree of abnormality of the equipment at each time $t$ as a learning outlier score $S_{G,n,t}$ from each of the **N** pieces of learning time-series data $D_{G,n,t}$ output from the learning data inputting unit 1. The outlier score calculating unit 3 outputs the calculated learning outlier score $S_{G,n,t}$ at each time t to an outlier data extracting unit 4.

The outlier score calculating unit 3 calculates the degree of abnormality of the equipment at each time $t$ as an abnormality detection outlier score $Su,t$ from the abnormality detection time-series data $D_{U,t}$ output from the abnormality detection data inputting unit 2. The outlier score calculating unit 3 outputs the calculated abnormality detection outlier score $Su,t$ at each time $t$ to the outlier data extracting unit 4.

The outlier data extracting unit 4 includes a threshold calculating unit 5, a threshold storing unit 6, and the outlier data extraction processing unit 7.

The outlier data extracting unit 4 extracts time-series data in a time period in which an abnormality may have occurred in the equipment as learning outlier data $OD_{G,n}$ from among pieces of the learning time-series data $D_{G,n,t}$ on the basis of the learning outlier score $S_{G,n,t}$ calculated by the outlier score calculating unit 3. The outlier data extracting unit 4 outputs the extracted learning outlier data $OD_{G,n}$ to each of an abnormality determining unit 8 and a waveform condition generating unit 12.

The outlier data extracting unit 4 extracts abnormality detection time-series data in a time period in which an abnormality may have occurred in the equipment as abnormality detection outlier data $OD_{U,ts'\text{-}te'}$ from among pieces of the abnormality detection time-series data $D_{U,t}$ on the basis of the abnormality detection outlier score $Su,t$ calculated by the outlier score calculating unit 3. The outlier data extracting unit 4 outputs the extracted abnormality detection outlier data $OD_{U,ts'\text{-}te'}$ to the abnormality determining unit 8.

The threshold calculating unit 5 is achieved by, for example, a threshold calculating circuit 24 illustrated in FIG. 2.

The threshold calculating unit 5 calculates a threshold $S_{th}$ from the learning outlier score $S_{G,n,t}$ calculated by the outlier score calculating unit 3, and outputs the threshold $S_{th}$ to the threshold storing unit 6.

The threshold storing unit 6 is achieved by, for example, a threshold storing circuit 25 illustrated in FIG. 2.

The threshold storing unit 6 stores the threshold $S_{th}$ output from the threshold calculating unit 5.

The outlier data extraction processing unit 7 is achieved by, for example, an outlier data extraction processing circuit 26 illustrated in FIG. 2.

The outlier data extraction processing unit 7 compares the learning outlier score $S_{G,n,t}$ calculated by the outlier score calculating unit 3 at each time t with the threshold $S_{th}$ stored by the threshold storing unit 6.

The outlier data extraction processing unit 7 extracts learning outlier data $OD_{G,n,ts\text{-}te}$ from among pieces of the learning time-series data $D_{G,n,t}$ on the basis of a comparison result between the learning outlier score $S_{G,n,t}$ at each time $t$ and the threshold $S_{th}$. The outlier data extraction processing unit 7 outputs the extracted learning outlier data $OD_{G,n,ts\text{-}te}$ to each of a type determining unit 9, a waveform condition selecting unit 10, a waveform classifying unit 13, and a waveform condition generation processing unit 14.

The outlier data extraction processing unit 7 compares the abnormality detection outlier score $Su,t$ calculated by the outlier score calculating unit 3 at each time $t$ with the threshold $S_{th}$ stored by the threshold storing unit 6.

The outlier data extraction processing unit 7 extracts abnormality detection outlier data $OD_{U,ts'\text{-}te'}$ from among pieces of the abnormality detection time-series data $D_{U,t}$ on the basis of a comparison result between the abnormality detection outlier score $Su,t$ at each time $t$ and the threshold $S_{th}$. The outlier data extraction processing unit 7 outputs the extracted abnormality detection outlier data $OD_{U,ts'\text{-}te'}$ to each of the type determining unit 9, the waveform condition selecting unit 10, and an abnormality determination processing unit 11.

The abnormality determining unit 8 includes the type determining unit 9, the waveform condition selecting unit 10, and the abnormality determination processing unit 11.

The abnormality determining unit 8 collates a waveform condition **Wp** with a waveform of the abnormality detection outlier data $OD_{U,ts'\text{-}te'}$ extracted by the outlier data extracting unit 4. The waveform condition **Wp** is a condition for determining that a waveform indicating a change in the abnormality detection outlier data $OD_{U,ts'\text{-}te'}$ extracted by the outlier data extracting unit 4 is a waveform obtained when the equipment is operating normally.

The abnormality determining unit 8 determines whether or not the equipment is operating abnormally on the basis of a collation result between the waveform condition **Wp** and the waveform of the abnormality detection outlier data $OD_{U,ts'-te'}$, and outputs a determination result indicating whether or not the equipment is operating abnormally to a detection result outputting unit 16.

The type determining unit 9 is achieved by, for example, a type determining circuit 27 illustrated in FIG. 2.

The type determining unit 9 calculates a feature amount $C_{G,n}$ of the learning outlier data $OD_{G,n,ts-te}$ extracted by the outlier data extraction processing unit 7, and determines the waveform type of the learning outlier data $OD_{G,n,ts-te}$ from the feature amount $C_{G,n}$. The type determining unit 9 outputs the determined waveform type of the learning outlier data $OD_{G,n,ts-te}$ to the waveform classifying unit 13.

The type determining unit 9 calculates a feature amounts $Cu$ of the abnormality detection outlier data $OD_{U,ts'-te'}$ extracted by the outlier data extraction processing unit 7, and determines the waveform type of the abnormality detection outlier data $OD_{U,ts'-te'}$ from the feature amount $Cu$. The type determining unit 9 outputs the determined waveform type of the abnormality detection outlier data $OD_{U,ts'-te'}$ to the waveform condition selecting unit 10.

The waveform condition selecting unit 10 is achieved by, for example, a waveform condition selecting circuit 28 illustrated in FIG. 2.

The waveform condition selecting unit 10 selects a waveform condition $Wp$ corresponding to the type determined by the type determining unit 9 from among one or more waveform conditions $Wp$ stored in a waveform condition storing unit 15, and outputs the selected waveform condition $Wp$ to the abnormality determination processing unit 11.

The abnormality determination processing unit 11 is achieved by, for example, an abnormality determination processing circuit 29 illustrated in FIG. 2.

The abnormality determination processing unit 11 collates the waveform condition $Wp$ selected by the waveform condition selecting unit 10 with the waveform of the abnormality detection outlier data $OD_{U,ts'-te'}$ extracted by the outlier data extraction processing unit 7.

The abnormality determination processing unit 11 determines whether or not the equipment is operating abnormally on the basis of a collation result between the waveform condition $Wp$ and the waveform of abnormality detection outlier data $OD_{U,ts'-te'}$, and outputs a determination result indicating whether or not the equipment is operating abnormally to the detection result outputting unit 16.

The waveform condition generating unit 12 includes the waveform classifying unit 13, the waveform condition generation processing unit 14, and the waveform condition storing unit 15.

The waveform condition generating unit 12 generates, from waveforms of one or more pieces of learning outlier data $OD_{G,n,ts-te}$ whose waveforms have been determined to be of the same type by the type determining unit 9 out of the pieces of learning outlier data $OD_{G,n,ts-te}$ extracted by the outlier data extracting unit 4, a waveform condition corresponding to the type. The waveform condition generating unit 12 stores the generated waveform condition.

The waveform classifying unit 13 is achieved by, for example, a waveform classifying circuit 30 illustrated in FIG. 2.

The waveform classifying unit 13 calculates the degree of similarity between one or more pieces of learning outlier data $OD_{G,n,ts-te}$ whose waveforms have been determined to be of the same type by the type determining unit 9 out of the pieces of learning outlier data $OD_{G,n,ts-te}$ extracted by the outlier data extracting unit 4.

The waveform classifying unit 13 classifies one or more pieces of learning outlier data $OD_{G,n,ts-te}$ whose waveforms have been determined to be of the same type by the type determining unit 9 into groups on the basis of the calculated degree of similarity.

The waveform classifying unit 13 outputs a classification result of one or more pieces of learning outlier data $OD_{G,n,ts-te}$ to the waveform condition generation processing unit 14.

The waveform condition generation processing unit 14 is achieved by, for example, a waveform condition generation processing circuit 31 illustrated in FIG. 2.

The waveform condition generation processing unit 14 generates, for each of the groups provided by the waveform classifying unit 13, a waveform condition $Wp$ corresponding the group from the waveforms of the one or more pieces of learning outlier data $OD_{G,n,ts-te}$ classified into the same group by the waveform classifying unit 13. The waveform condition generation processing unit 14 outputs the generated waveform condition $Wp$ to the waveform condition storing unit 15.

The waveform condition storing unit 15 is achieved by, for example, a waveform condition storing circuit 32 illustrated in FIG. 2.

The waveform condition storing unit 15 stores the waveform condition $Wp$ generated by the waveform condition generation processing unit 14.

The detection result outputting unit 16 is achieved by, for example, a detection result outputting circuit 33 illustrated in FIG. 2.

The detection result outputting unit 16 displays the determination result output from the abnormality determination processing unit 11 on, for example, a display (not illustrated).

In FIG. 1, it is assumed that each of the learning data inputting unit 1, the abnormality detection data inputting unit 2, the outlier score calculating unit 3, the threshold calculating unit 5, the threshold storing unit 6, the outlier data extraction processing unit 7, the type determining unit 9, the waveform condition selecting unit 10, the abnormality determination processing unit 11, the waveform classifying unit 13, the waveform condition generation processing unit 14, the waveform condition storing unit 15, and the detection result outputting unit 16, which are constituent elements of the abnormality detection device, is achieved by dedicated hardware as illustrated in FIG. 2. That is, it is assumed that the abnormality detection device is achieved by the input interface circuit 21, the input interface circuit 22, the outlier score calculating circuit 23, the threshold calculating circuit 24, the threshold storing circuit 25, the outlier data extraction processing circuit 26, the type determining circuit 27, the waveform condition selecting circuit 28, the abnormality determination processing circuit 29, the waveform classifying circuit 30, the waveform condition generation processing circuit 31, the waveform condition storing circuit 32, and the detection result outputting circuit 33.

Here, for example, to each of the threshold storing circuit 25 and the waveform condition storing circuit 32, a nonvolatile or volatile semiconductor memory such as random access memory (RAM), read only memory (ROM), flash memory, erasable programmable read only memory (EPROM), or electrically erasable programmable read only memory (EEPROM), a magnetic disk, a flexible disk, an optical disc, a compact disc, a mini disc, or a digital versatile disc (DVD) is applicable.

For example, to each of the input interface circuit 21, the input interface circuit 22, the outlier score calculating circuit 23, the threshold calculating circuit 24, the outlier data extraction processing circuit 26, the type determining circuit 27, the waveform condition selecting circuit 28, the abnormality determination processing circuit 29, the waveform classifying circuit 30, the waveform condition generation processing circuit 31, and the detection result outputting circuit 33, a single circuit, a composite circuit, a programmed processor, a parallel programmed processor, an application specific integrated circuit (ASIC), a field-programmable gate array (FPGA), or a combination thereof is applicable.

The constituent elements of the abnormality detection device are not limited to those achieved by dedicated hardware, and the abnormality detection device may be achieved by software, firmware, or a combination of software and firmware.

The software or the firmware is stored as a program in a memory of a computer. The computer means hardware for executing a program. For example, to the computer, a central processing unit (CPU), a central processing device, a processing device, an arithmetic device, a microprocessor, a microcomputer, a processor, or a digital signal processor (DSP) is applicable.

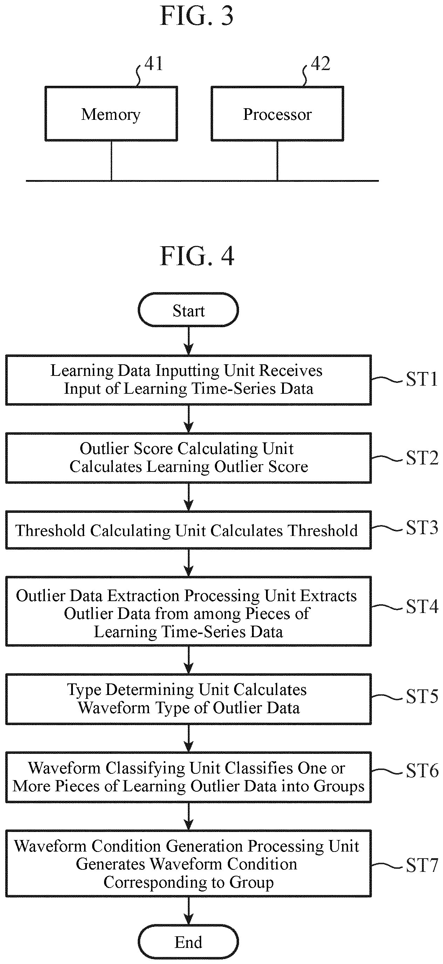

FIG. 3 is a hardware configuration diagram of a computer when the abnormality detection device is achieved by software, firmware, or the like.

When the abnormality detection device is achieved by software, firmware, or the like, the threshold storing unit 6 and the waveform condition storing unit 15 are configured on a memory 41 of a computer. A program for causing the computer to execute a processing procedure performed in the learning data inputting unit 1, the abnormality detection data inputting unit 2, the outlier score calculating unit 3, the threshold calculating unit 5, the outlier data extraction processing unit 7, the type determining unit 9, the waveform condition selecting unit 10, the abnormality determination processing unit 11, the waveform classifying unit 13, the waveform condition generation processing unit 14, and the detection result outputting unit 16 is stored in the memory 41. A processor 42 of the computer executes the program stored in the memory 41.

FIG. 4 is a flowchart illustrating a processing procedure during learning in the abnormality detection device.

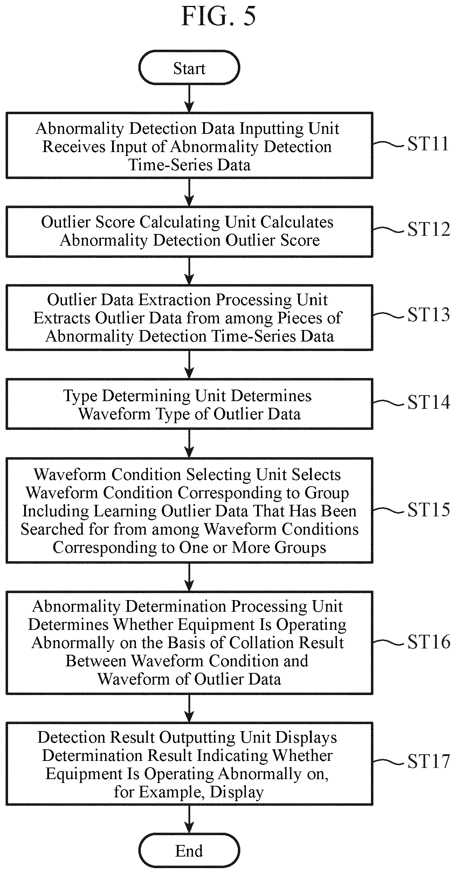

FIG. 5 is a flowchart illustrating an abnormality detection method which is a processing procedure during abnormality detection in the abnormality detection device.

FIG. 2 illustrates an example in which each of the constituent elements of the abnormality detection device is achieved by dedicated hardware, and FIG. 3 illustrates an example in which the abnormality detection device is achieved by software, firmware, or the like. However, this is only an example, and some constituent elements in the abnormality detection device may be achieved by dedicated hardware, and the remaining constituent elements may be achieved by software, firmware, or the like.

Next, an operation of the abnormality detection device illustrated in FIG. 1 will be described.

First, an operation during learning in the abnormality detection device will be described.

First, the learning data inputting unit 1 receives input of $N$ pieces of learning time-series data $D_{G,n,t}$ ($n = 1, 2,..., N$) indicating states of equipment which is an abnormality detection target at a plurality of times $t$ in time series when the equipment is operating normally (step ST1 in FIG. 4).

The learning data inputting unit 1 outputs the received learning time-series data $D_{G,n,t}$ to each of the outlier score calculating unit 3 and the outlier data extracting unit 4.

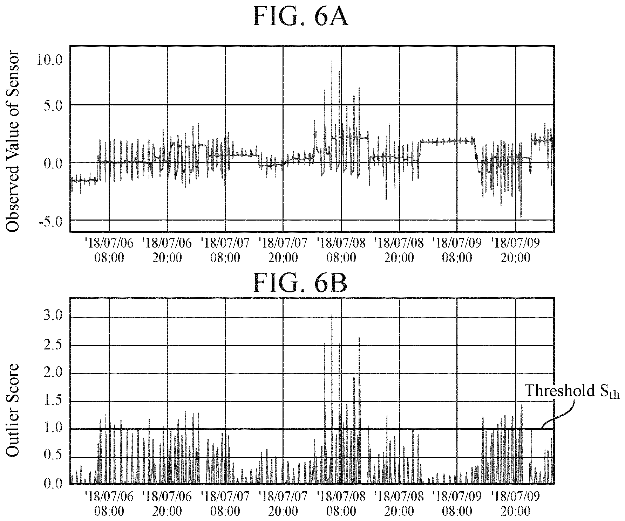

FIG. 6A is an explanatory diagram illustrating an example of the learning time-series data $D_{G,n,t}$. In FIG. 6A, the horizontal axis indicates time, and the vertical axis indicates an observed value of a sensor included in the learning time-series data $D_{G,n,t}$.

In FIG. 6A, in order to simplify the drawing, the observed values of the sensor included in the learning time-series data $D_{G,n,t}$ are illustrated as continuous values, but the observed values of the sensor are discrete values.

When receiving $N$ pieces of learning time-series data $D_{G,n,t}$ from the learning data inputting unit 1, the outlier score calculating unit 3 calculates the degree of abnormality of the equipment at each time **t** as a learning outlier score $S_{G,n,t}$ from each of the **N** pieces of learning time-series data $D_{G,n,t}$ (step ST2 in FIG. 4).

FIG. 6B is an explanatory diagram illustrating examples of the learning outlier score $S_{G,n,t}$ and the threshold $S_{th}$. In FIG. 6B, the horizontal axis indicates time, and the vertical axis indicates the learning outlier score $S_{G,n,t}$.

A known technique is applied to a process for calculating the learning outlier score $S_{G,n,t}$. For example, the following Non-Patent Literature 1 discloses a process for calculating an outlier score. The "Matrix Profile" disclosed in Non-Patent Literature 1 corresponds to an outlier score.

Non-Patent Literature 1:

Chin-Chia Michael Yeh, Yan Zhu, Liudmila Ulanova, Nurjahan Begum, Yifei Ding, Hoang Anh Dau, Diego Furtado Silva, Abdullah Mueen, Eamonn Keogh (2016). Matrix Profile I: All Pairs Similarity Joins for Time Series: A Unifying View that Includes Motifs, Discords and Shapelets.

In the abnormality detection device illustrated in FIG. 1, the outlier score calculating unit 3 calculates the learning outlier score $S_{G,n,t}$ by using the process for calculating an outlier score disclosed in Non-Patent Literature 1.

However, this is only an example, and for example, the outlier score calculating unit 3 may calculate a residual between an observed value of a sensor at each time **t** included in the learning time-series data $D_{G,n,t}$ and a predicted value at time **t** as the learning outlier score $S_{G,n,t}$.

The outlier score calculating unit 3 outputs the calculated learning outlier score $S_{G,n,t}$ at each time **t** to each of the threshold calculating unit 5 and the outlier data extraction processing unit 7.

The threshold calculating unit 5 calculates the threshold $S_{th}$ as illustrated in FIG. 6B from the learning outlier score $S_{G,n,t}$ at each time **t** calculated by the outlier score calculating unit 3 (step ST3 in FIG. 4).

The threshold calculating unit 5 outputs the calculated threshold $S_{th}$ to the threshold storing unit 6.

The threshold storing unit 6 stores the threshold $S_{th}$ output from the threshold calculating unit 5.

Hereinafter, an example of a process for calculating the threshold $S_{th}$ by the threshold calculating unit 5 will be described.

First, the threshold calculating unit 5 calculates a mean value $S_{G,ave}$ of all the learning outlier scores $S_{G,n,t}$ calculated from the respective **N** pieces of learning time-series data $D_{G,n,t}$ by the outlier score calculating unit 3.

In addition, the threshold calculating unit 5 calculates a standard deviation $\sigma$ of all the learning outlier scores $S_{G,n,t}$ calculated from the respective **N** pieces of learning time-series data $D_{G,n,t}$ by the outlier score calculating unit 3.

Next, the threshold calculating unit 5 calculates the threshold $S_{th}$ from the mean value $S_{G,ave}$ and the standard deviation $\sigma$ as illustrated in the following formula (1).

$$S_{th} = S_{G,ave} + 3\sigma \qquad (1)$$

In the abnormality detection device illustrated in FIG. 1, the threshold calculating unit 5 calculates the threshold $S_{th}$ on the assumption that a threshold used during learning and a threshold used during abnormality detection are the same threshold.

However, this is only an example, and the threshold calculating unit 5 may separately calculate the threshold $S_{th}$ used during learning and the threshold $S_{th}$ used during abnormality detection.

As the threshold $S_{th}$ used during learning, for example, a threshold in a range of ($S_{G,ave} + \sigma$) to ($S_{G,ave} + 2\sigma$) is calculated as a threshold less than the threshold $S_{th}$ illustrated in formula (1) in such a manner that the outlier data extraction processing unit 7 can extract many pieces of learning outlier data $OD_{G,n,ts-te}$.

As the threshold $S_{th}$ used during abnormality detection, for example, the threshold $S_{th}$ illustrated in formula (1) is calculated.

The outlier data extraction processing unit 7 acquires the learning outlier score $S_{G,n,t}$ calculated by the outlier score calculating unit 3 at each time **t** and acquires the threshold $S_{th}$ stored by the threshold storing unit 6.

The outlier data extraction processing unit 7 compares the learning outlier score $S_{G,n,t}$ at each time **t** with the threshold $S_{th}$.

The outlier data extraction processing unit 7 detects a period **ts-te** in which a learning outlier score $S_{G,n,t}$ is equal to or more than the threshold $S_{th}$ by specifying a learning outlier score $S_{G,n,t}$ equal to or more than the threshold $S_{th}$ among the learning outlier scores $S_{G,n,t}$ at respective times t on the basis of a comparison result between the learning outlier score $S_{G,n,t}$ and the threshold $S_{th}$.

The outlier data extraction processing unit 7 extracts learning time-series data $D_{G,n,ts}$ to $D_{G,n,te}$ in the detection period **ts-te** as learning outlier data $OD_{G,n,ts-te}$ from among pieces of learning time-series data $D_{G,n,t}$ (step ST4 in FIG. 4).

The outlier data extraction processing unit 7 outputs the extracted learning outlier data $OD_{G,n,ts-te}$ to each of the type determining unit 9, the waveform condition selecting unit 10, the waveform classifying unit 13, and the waveform condition generation processing unit 14.

When receiving the learning outlier data $OD_{G,n,ts\text{-}te}$ from the outlier data extraction processing unit 7, the type determining unit 9 calculates a feature amount $C_{G,n}$ of the learning outlier data $OD_{G,n,ts\text{-}te}$, and determines the waveform type of the learning outlier data $OD_{G,n,ts\text{-}te}$ from the feature amount $C_{G,n}$ (step ST5 in FIG. 4).

The type determining unit 9 outputs the determined waveform type of the learning outlier data $OD_{G,n,ts\text{-}te}$ to the waveform classifying unit 13.

Hereinafter, a process for determining a waveform type by the type determining unit 9 will be specifically described.

Here, an example in which the type determining unit 9 classifies the waveforms of pieces of learning outlier data $OD_{G,n,ts\text{-}te}$ into six groups of an upper peak type waveform, a lower peak type waveform, an upper and lower peak type waveform, a transient ascending type waveform, a transient descending type waveform, and a vibration type waveform will be described.

FIG. 7 is an explanatory diagram illustrating waveforms of learning outlier data $OD_{G,n,ts\text{-}te}$ when the waveform type is an "upper peak type", a "lower peak type", an "upper and lower peak type", a "transient ascending type", a "transient descending type", or a "vibration type".

In FIG. 7, the start point is a point where the waveform of the learning outlier data $OD_{G,n,ts\text{-}te}$ starts, and the end point is a point where the waveform of the learning outlier data $OD_{G,n,ts\text{-}te}$ ends.

[Upper peak type]

In the upper peak type waveform, as illustrated in FIG. 7A, a value of the learning outlier data $OD_{G,n,ts\text{-}te}$ rises sharply, then falls sharply, and then returns to the vicinity of the value observed before the value of the learning outlier data $OD_{G,n,ts\text{-}te}$ rises sharply.

[Lower peak type]

In the lower peak type waveform, as illustrated in FIG. 7B, a value of the learning outlier data $OD_{G,n,ts\text{-}te}$ falls sharply, then rises sharply, and then returns to the vicinity of the value observed before the value of the learning outlier data $OD_{G,n,ts\text{-}te}$ falls sharply.

[Upper and lower peak type]

In the upper and lower peak type waveform, as illustrated in FIG. 7C, a value of the learning outlier data $OD_{G,n,ts\text{-}te}$ falls sharply to a minimum value, then rises sharply to a maximum value, and then returns to the vicinity of the value observed before the value of the learning outlier data $OD_{G,n,ts\text{-}te}$ falls sharply.

In addition, in the upper and lower peak type waveforms, a value of the learning outlier data $OD_{G,n,ts\text{-}te}$ rises sharply to a maximum value, then falls sharply to a minimum value, and then returns to the vicinity of the value observed before the value of the learning outlier data $OD_{G,n,ts\text{-}te}$ rises sharply.

[Transient ascending type]

In the transient ascending type waveform, as illustrated in FIG. 7D, a value of the learning outlier data $OD_{G,n,ts\text{-}te}$ rises to a maximum value, and then becomes a value in the vicinity of the maximum value.

[Transient descending type waveform]

In the transient descending type waveform, as illustrated in FIG. 7E, a value of the learning outlier data $OD_{G,n,ts\text{-}te}$ falls to a minimum value, and then becomes a value in the vicinity of the minimum value.

[Vibration type waveform]

In the vibration type waveform, as illustrated in FIG. 7F, a value of the learning outlier data $OD_{G,n,ts\text{-}te}$ continues to oscillate up and down and does not converge.

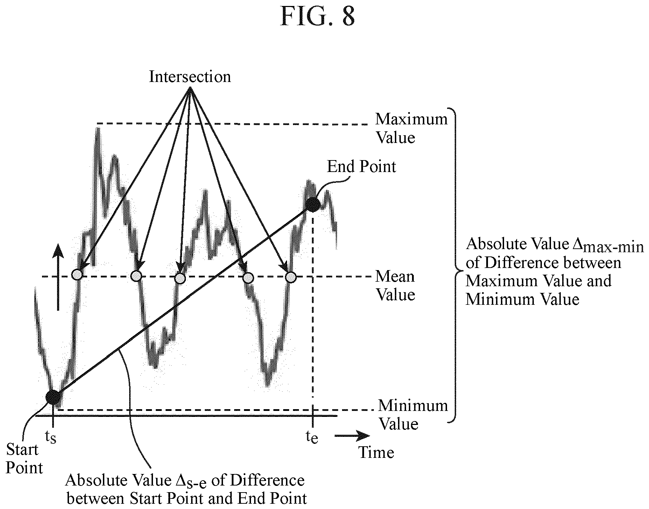

FIG. 8 is an explanatory diagram illustrating an example of a feature amount $C_{G,n}$ in the learning outlier data $OD_{G,n,ts\text{-}te}$.

First, the type determining unit 9 calculates a mean value $D_{G,n,ave}$ of the pieces of learning outlier data $OD_{G,n,ts\text{-}te}$ output from the outlier data extraction processing unit 7.

The type determining unit 9 counts the number of intersections CN, which is the number of times the learning outlier data $OD_{G,n,ts-te}$ intersects with the mean value $D_{G,n,ave}$, as one of the feature amounts $C_{G,n}$.

The learning outlier data $OD_{G,n,ts-te}$ illustrated in FIG. 8 intersects with the mean value $D_{G,n,ave}$ five times.

The type determining unit 9 focuses on the first intersection counting from the start point of the learning outlier data $OD_{G,n,ts-te}$ among one or more intersections where the learning outlier data $OD_{G,n,ts-te}$ intersects with the mean value $D_{G,n,ave}$.

When the learning outlier data $OD_{G,n,ts-te}$ changes from a value lower than the mean value $D_{G,n,ave}$ to a value higher than the mean value $D_{G,n,ave}$ after the first intersection, the type determining unit 9 takes "first intersection = positive" as one of the feature amounts $C_{G,n}$.

When the learning outlier data $OD_{G,n,ts-te}$ changes from a value higher than the mean value $D_{G,n,ave}$ to a value lower than the mean value $D_{G,n,ave}$ after the first intersection, the type determining unit 9 takes "first intersection = negative" as one of the feature amounts $C_{G,n}$.

In the learning outlier data $OD_{G,n,ts-te}$ illustrated in FIG. 8, the first intersection is positive.

In addition, the type determining unit 9 calculates, as one of the feature amounts $C_{G,n}$, an absolute value $\Delta_{s-e}$ of a difference between the start point of the learning outlier data $OD_{G,n,ts-te}$ and the end point of the learning outlier data $OD_{G,n,ts-te}$

Furthermore, the type determining unit 9 calculates, as one of the feature amounts $C_{G,n}$, an absolute value $\Delta_{max-min}$ of a difference between a maximum value out of pieces of learning outlier data $OD_{G,n,ts-te}$ and a minimum value out of pieces of learning outlier data $OD_{G,n,ts-te}$.

When the number of intersections CN is 2 and "first intersection = positive", the type determining unit 9 determines that the waveform type is "upper peak type".

When the number of intersections CN is 1, "first intersection = positive", and $\Delta_{s-e} \leq \Delta_{max-min} \times \alpha$, the type determining unit 9 determines that the waveform type is "upper peak type". Provided that $\alpha$ is an arbitrary constant, and $0 \leq \alpha \leq 1$. The constant $\alpha$ may be stored in an internal memory of the type determining unit 9 or may be given from the outside.

When the number of intersections CN is 2 and "first intersection = negative", the type determining unit 9 determines that the waveform type is "lower peak type".

When the number of intersections CN is 1, "first intersection = negative", and $\Delta_{s-e} \leq \Delta_{max-min} \times \alpha$, the type determining unit 9 determines that the waveform type is "lower peak type".

When the number of intersections CN is 3 and $\Delta_{s-e} \leq \Delta_{max-min} \times \beta$, the type determining unit 9 determines that the waveform type is "upper and lower peak type". Provided that $\beta$ is an arbitrary constant, and $0 \leq \beta \leq 1$. The constant $\beta$ may be stored in an internal memory of the type determining unit 9 or may be given from the outside.

When the number of intersections CN is 1, "first intersection = positive", and $\Delta_{s-e} > \Delta_{max-min} \times \alpha$, the type determining unit 9 determines that the waveform type is "transient ascending type".

When the number of intersections CN is 1, "first intersection = negative", and $\Delta_{s-e} > \Delta_{max-min} \times \alpha$, the type determining unit 9 determines that the waveform type is "transient descending type".

When the number of intersections CN is 4 or more, the type determining unit 9 determines that the waveform type is "vibration type".

When the number of intersections CN is 3 and $\Delta_{s-e} > \Delta_{max-min} \times \alpha$, the type determining unit 9 determines that the waveform type is "vibration type".

The waveform classifying unit 13 classifies one or more pieces of learning outlier data $OD_{G,n,ts-te}$ whose waveforms have been determined to be of the same type by the type determining unit 9 out of the pieces of learning outlier data $OD_{G,n,ts-te}$ extracted by the outlier data extracting unit 4 into groups.

Next, the waveform classifying unit 13 calculates, for each of the provided groups, the degree of similarity between one or more pieces of learning outlier data $OD_{G,n,ts-te}$ included in the group.

As the degree of similarity between one or more pieces of learning outlier data $OD_{G,n,ts-te}$, a distance between the waveforms of one or more pieces of learning outlier data $OD_{G,n,ts-te}$ may be calculated. As the distance to be calculated, a Euclidean distance, a 1-correlation coefficient, a Manhattan distance, a dynamic time warping (DTW) distance, and the like are conceivable. The shorter the distance, the higher the degree of similarity.

Since a process itself for calculating a distance between the waveforms of one or more pieces of learning outlier data $OD_{G,n,ts-te}$ is a known technique, detailed description thereof is omitted.

The waveform classifying unit 13 further classifies one or more pieces of learning outlier data $OD_{G,n,ts-te}$ classified into the same group into groups on the basis of the calculated degree of similarity (step ST6 in FIG. 4).

Specifically, the waveform classifying unit 13 performs clustering of learning outlier data $OD_{G,n,ts-te}$ in such a manner that pieces of learning outlier data $OD_{G,n,ts-te}$ having the calculated high degree of similarity to each other are included in the same group among one or more pieces of learning outlier data $OD_{G,n,ts-te}$ classified into the same group. The waveform classifying unit 13 determines, for example, that pieces of learning outlier data $OD_{G,n,ts-te}$ having the calculated degree of similarity higher than or equal to a threshold are pieces of learning outlier data $OD_{G,n,ts-te}$ having a high degree of similarity to each other.

As a clustering method, a k-means method can be used. However, the clustering method is not limited to the k-means method, and spectral clustering, hierarchical clustering, or the like may be used.

The threshold to be compared with the calculated degree of similarity may be stored in an internal memory of the type determining unit 9 or may be given from the outside.

The waveform classifying unit 13 outputs a classification result of one or more pieces of learning outlier data $OD_{G,n,ts\text{-}te}$ to the waveform condition generation processing unit 14.

The waveform condition generation processing unit 14 generates, for each of the groups provided by the waveform classifying unit 13, a waveform condition **Wp** corresponding to the group from the waveforms of the one or more pieces of learning outlier data $OD_{G,n,ts\text{-}te}$ included in the group (step ST7 in FIG. 4).

The waveform condition generation processing unit 14 generates, for example, a band model indicating a normal range of a waveform as the waveform condition **Wp.**

The waveform condition generation processing unit 14 outputs the generated waveform condition **Wp** to the waveform condition storing unit 15.

The waveform condition storing unit 15 stores the waveform condition **Wp** output from the waveform condition generation processing unit 14.

Hereinafter, a process for generating a band model by the waveform condition generation processing unit 14 will be specifically described.

Here, for convenience of explanation, it is assumed that one or more pieces of learning outlier data $OD_{G,n,ts\text{-}te}$ included in one group are represented by $P_1$, $P_2$,..., $P_m$. It is assumed that a value of $P_i$ at time **t** is represented by $P_i[t]$. i = 1, 2, ⋯, m. The time **t** is any time in the period **ts-te**, and specifically, the time **t** is any time when the time **ts** is replaced with 1 (t = 1, 2,..., (te-ts)).

The waveform condition generation processing unit 14 calculates a mean value $P_{mean}[t]$ of m pieces of $P_i[t]$ at time **t** as illustrated in the following formula (2), and calculates a standard deviation $P_{std}[t]$ of m pieces of $P_i[t]$ at time **t** as illustrated in the following formula (3).

$$P_{mean}[t] = \frac{P_1[t] + P_2[t] + \cdots + P_m[t]}{m} \qquad (2)$$

$$\mathrm{Pstd}[t] = \sqrt{\frac{(P_1[t] - P_{mean}[t])^2 + \cdots + (P_m[t] - P_{mean}[t])^2}{m}} \qquad (3)$$

The waveform condition generation processing unit 14 calculates an upper limit value $B_{upper}[t]$ of a normal range indicated by a band model by using the mean value $P_{mean}[t]$, the standard deviation $P_{std}[t]$, and a constant $\lambda$ (**1** $\leq \lambda$) as illustrated in the following formula (4). The constant $\lambda$ may be stored in an internal memory of the waveform condition generation processing unit 14 or may be given from the outside.

$$\mathbf{B_{upper}}[t] = \mathbf{P_{mean}}[t] + \mathbf{P_{std}}[t] \times \lambda \qquad (4)$$

The waveform condition generation processing unit 14 calculates a lower limit value $B_{lower}[t]$ of a normal range indicated by a band model by using the mean value $P_{mean}[t]$, the standard deviation $P_{std}[t]$, and a constant $\lambda$ (**1** $\leq \lambda$) as illustrated in the following formula (5).

$$\mathbf{B_{lower}}[t] = \mathbf{P_{mean}}[t] - \mathbf{P_{std}}[t] \times \lambda \qquad (5)$$

Here, the waveform condition generation processing unit 14 calculates the upper limit value $B_{upper}[t]$ and the lower limit value $B_{lower}[t]$ of a normal range indicated by a band model by using the mean value $P_{mean}[t]$ and the standard deviation $P_{std}[t]$. However, this is only an example, and the waveform condition generation processing unit 14 may calculate the upper limit value $B_{upper}[t]$ and the lower limit value $B_{lower}[t]$ of a normal range indicated by a band model by using a maximum value $P_{max}[t]$ and a minimum value $P_{min}[t]$ out of m pieces of $P_i[t]$ at time **t.**

The waveform condition generation processing unit 14 determines the maximum value $P_{max}[t]$ out of m pieces of $P_i[t]$ at time **t** as illustrated in the following formula (6), and determines the minimum value $P_{min}[t]$ out of m pieces of m $P_i[t]$ at time t as illustrated in the following formula (7).

$$\mathbf{P_{max}}[t] = \max(\mathbf{P_1}[t], \mathbf{P_2}[t], \dots, \mathbf{P_m}[t]) \qquad (6)$$

$$\mathbf{P_{min}}[t] = \min(\mathbf{P_1}[t], \mathbf{P_2}[t], \dots, \mathbf{P_m}[t]) \qquad (7)$$

The waveform condition generation processing unit 14 calculates the upper limit value $\mathbf{B_{upper}}[t]$ of a normal range indicated by a band model by using the maximum value $\mathbf{P_{max}}[t]$, the minimum value $\mathbf{P_{min}}[t]$, and a constant $\delta$ ($1 \leq \delta \leq \mathbf{m}$) as illustrated in the following formula (8).

$$B_{upper}[t] = max\left(P_{max}\left[t - \frac{\delta}{2} : t + \frac{\delta}{2}\right]\right) \qquad (8)$$

In formula (8), $\mathbf{P_{max}}[t - \delta/2 : t + \delta/2]$ is a maximum value $\mathbf{P_{max}}[t]$ at each time $\mathbf{t}$ included in time ($\mathbf{t} - \delta/2$) to time ($\mathbf{t} + \delta/2$).

The waveform condition generation processing unit 14 calculates the lower limit value $\mathbf{B_{lower}}[t]$ of a normal range indicated by a band model by using the maximum value $\mathbf{P_{max}}[t]$, the minimum value $\mathbf{P_{min}}[t]$, and a constant $\delta$ ($1 \leq \delta \leq \mathbf{m}$) as illustrated in the following formula (9).

$$B_{lower}[t] = min\left(P_{min}\left[t - \frac{\delta}{2} : t + \frac{\delta}{2}\right]\right) \qquad (9)$$

In formula (9), $\mathbf{P_{min}}[t - \delta/2 : t + \delta/2]$ is a minimum value $\mathbf{P_{min}}[t]$ at each time $\mathbf{t}$ included in time ($\mathbf{t} - \delta/2$) to time ($\mathbf{t} + \delta/2$).

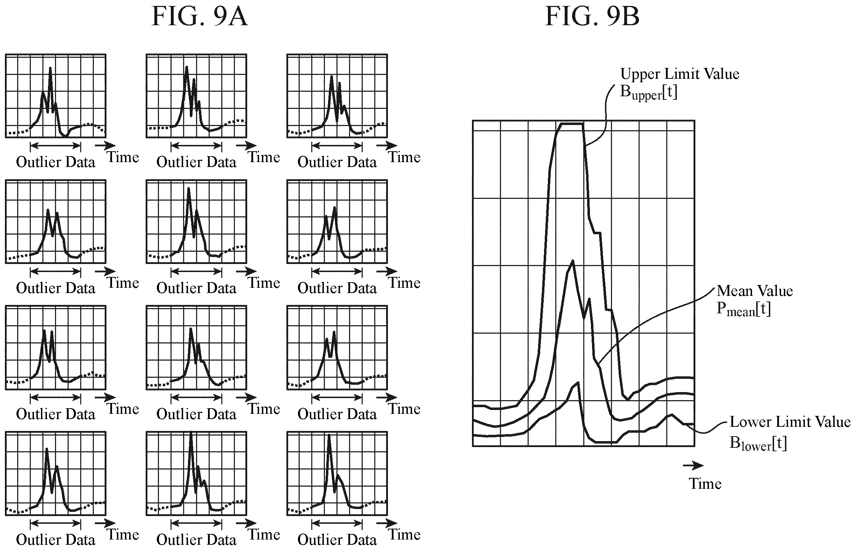

FIG. 9 is an explanatory diagram illustrating an example of generating a band model having a waveform type of "upper peak type".

FIG. 9A illustrates N (N = 12) pieces of learning outlier data $\mathbf{OD_{G,n,ts\text{-}te}}$ having a waveform type of "upper peak type".

In FIG. 9A, the horizontal axis indicates time $\mathbf{t}$, and the vertical axis indicates a value $\mathbf{P_i}[t]$ of the learning outlier data $\mathbf{OD_{G,n,ts\text{-}te}}$ at time $\mathbf{t}$.

The solid line part indicates learning outlier data $\mathbf{OD_{G,n,ts\text{-}te}}$, and the broken line part indicates learning time-series data $\mathbf{D_{G,n,t}}$ before and after the learning outlier data $\mathbf{OD_{G,n,ts\text{-}te}}$.

FIG. 9B illustrates a mean value $\mathbf{P_{mean}}[t]$ of $\mathbf{N}$ pieces of learning outlier data $\mathbf{OD_{G,n,ts\text{-}te}}$, and an upper limit value $\mathbf{B_{upper}}[t]$ and a lower limit value $\mathbf{B_{lower}}[t]$ of a normal range indicated by a band model.

In FIG. 9B, the horizontal axis indicates time $\mathbf{t}$, and the vertical axis indicates a mean value $\mathbf{P_{mean}}[t]$ at time $\mathbf{t}$, an upper limit value $\mathbf{B_{upper}}[t]$ at time $\mathbf{t}$, and a lower limit value $\mathbf{B_{lower}}[t]$ at time $\mathbf{t}$.

In the example of FIG. 9, the waveform condition generation processing unit 14 generates a band model having a waveform type of "upper peak type" from 12 pieces of learning outlier data $\mathbf{OD_{G,n,ts\text{-}te}}$.

Next, an operation during abnormality detection in the abnormality detection device will be described.

First, the abnormality detection data inputting unit 2 receives input of abnormality detection time-series data $\mathbf{D_{U,t}}$ indicating states of equipment which is an abnormality detection target at a plurality of times $\mathbf{t}$ in time series (step ST11 in FIG. 5).

The abnormality detection data inputting unit 2 outputs the received abnormality detection time-series data $\mathbf{D_{U,t}}$ to each of the outlier score calculating unit 3 and the outlier data extraction processing unit 7.

When receiving the abnormality detection time-series data $\mathbf{Du,t}$ output from the abnormality detection data inputting unit 2, the outlier score calculating unit 3 calculates an abnormality detection outlier score $\mathbf{Su,t}$ at each time $\mathbf{t}$ from the abnormality detection time-series data $\mathbf{D_{U,t}}$ (step ST12 in FIG. 5).

A process for calculating the abnormality detection outlier score $\mathbf{Su,t}$ is similar to the process for calculating a learning outlier score $\mathbf{S_{G,n,t}}$.

The outlier score calculating unit 3 outputs the calculated abnormality detection outlier score $\mathbf{S_{U,t}}$ at each time $\mathbf{t}$ to the outlier data extraction processing unit 7.

The outlier data extraction processing unit 7 acquires the abnormality detection outlier score $\mathbf{Su,t}$ calculated by the outlier score calculating unit 3 at each time $\mathbf{t}$ and acquires the threshold $\mathbf{S_{th}}$ stored by the threshold storing unit 6.

The outlier data extraction processing unit 7 compares the abnormality detection outlier score $\mathbf{S_{U,t}}$ at each time $\mathbf{t}$ with the threshold $\mathbf{S_{th}}$.

The outlier data extraction processing unit 7 detects a period $\mathbf{ts'\text{-}te'}$ in which an abnormality detection outlier score $\mathbf{Su,t}$ is equal to or more than the threshold $\mathbf{S_{th}}$ by specifying an abnormality detection outlier score $\mathbf{Su,t}$ equal to or more than the threshold $S_{th}$ among the abnormality detection outlier scores $S_{u,t}$ at respective times $t$ on the basis of a comparison result between the abnormality detection outlier score $S_{U,t}$ and the threshold $S_{th}$.

The outlier data extraction processing unit 7 extracts abnormality detection time-series data $D_{U,ts'}$ to $D_{U,te'}$ in the detection period $ts'$-$te'$ as abnormality detection outlier data $OD_{U,ts'-te'}$ from among pieces of abnormality detection time-series data $D_{U,t}$ (step ST13 in FIG. 5).

The outlier data extraction processing unit 7 outputs the extracted abnormality detection outlier data $OD_{U,ts'-te'}$ to each of the type determining unit 9, the waveform condition selecting unit 10, and the abnormality determination processing unit 11.

In the abnormality detection device illustrated in FIG. 1, in order to simplify explanation, the following description will be given by assuming that the outlier data extraction processing unit 7 extracts one piece of abnormality detection outlier data $OD_{U,ts'-te'}$ from among pieces of abnormality detection time-series data $D_{U,t}$.

When receiving the abnormality detection outlier data $OD_{U,ts'-te'}$ from the outlier data extraction processing unit 7, the type determining unit 9 calculates a feature amount Cu of the abnormality detection outlier data $OD_{U,ts'-te'}$.

A process for calculating the feature amount Cu in the abnormality detection outlier data $OD_{U,ts'-te'}$ is similar to the process for calculating a feature amount $C_{G,n}$ in the learning outlier data $OD_{G,n,ts-te}$.

The type determining unit 9 determines the waveform type of the abnormality detection outlier data $OD_{U,ts'-te'}$ from the feature amount Cu of the abnormality detection outlier data $OD_{U,ts'-te'}$ (step ST14 in FIG. 5).

A process for determining the waveform type of the abnormality detection outlier data $OD_{U,ts'-te'}$ is similar to the process for determining the waveform type of the learning outlier data $OD_{G,n,ts-te}$.

The type determining unit 9 outputs the determined waveform type to the waveform condition selecting unit 10.

The waveform condition selecting unit 10 calculates the degree of similarity between the abnormality detection outlier data $OD_{U,ts'-te'}$ output from the outlier data extraction processing unit 7 and each of $N$ pieces of learning outlier data $OD_{G,n,ts-te}$ output from the outlier data extraction processing unit 7.

As the degree of similarity between the abnormality detection outlier data $OD_{U,ts'-te'}$ and the learning outlier data $OD_{G,n,ts-te}$, a distance between the waveform of abnormality detection outlier data $OD_{U,ts'-te'}$ and the waveform of the learning outlier data $OD_{G,n,ts-te}$ may be calculated. As the distance to be calculated, a Euclidean distance, a 1-correlation coefficient, a Manhattan distance, a DTW distance, and the like are conceivable. Since a process itself for calculating the distance is a known technique, detailed description thereof is omitted.

The waveform condition selecting unit 10 searches for a piece of learning outlier data $OD_{G,n,ts-te}$ having the highest degree of similarity to the abnormality detection outlier data $OD_{U,ts'-te'}$ among $N$ pieces of learning outlier data $OD_{G,n,ts-te}$. The waveform type of the piece of learning outlier data $OD_{G,n,ts-te}$ having the highest degree of similarity to the abnormality detection outlier data $OD_{U,ts'-te'}$ is the same as the waveform type of the abnormality detection outlier data $OD_{U,ts'-te'}$.

The waveform condition selecting unit 10 selects a waveform condition $Wp$ corresponding to a group including the piece of learning outlier data $OD_{G,n,ts-te}$ that has been searched for from among waveform conditions $Wp$ corresponding to the one or more groups stored by the waveform condition storing unit 15 (step ST15 in FIG. 5).

The waveform condition selecting unit 10 outputs the selected waveform condition $Wp$ to the abnormality determination processing unit 11.

The abnormality determination processing unit 11 collates the waveform condition $Wp$ selected by the waveform condition selecting unit 10 with the waveform of the abnormality detection outlier data $OD_{U,ts'-te'}$ extracted by the outlier data extraction processing unit 7.

The abnormality determination processing unit 11 determines whether or not the equipment is operating abnormally on the basis of a collation result between the waveform condition $Wp$ and the waveform of abnormality detection outlier data $OD_{U,ts'-te'}$ (step ST16 in FIG. 5).

The abnormality determination processing unit 11 outputs a determination result indicating whether or not the equipment is operating abnormally to the detection result outputting unit 16.

The detection result outputting unit 16 displays the determination result output from the abnormality determination processing unit 11 on, for example, a display (not illustrated) (step ST17 in FIG. 5).

Hereinafter, a process for determining abnormality of equipment by the abnormality determination processing unit 11 will be specifically described.

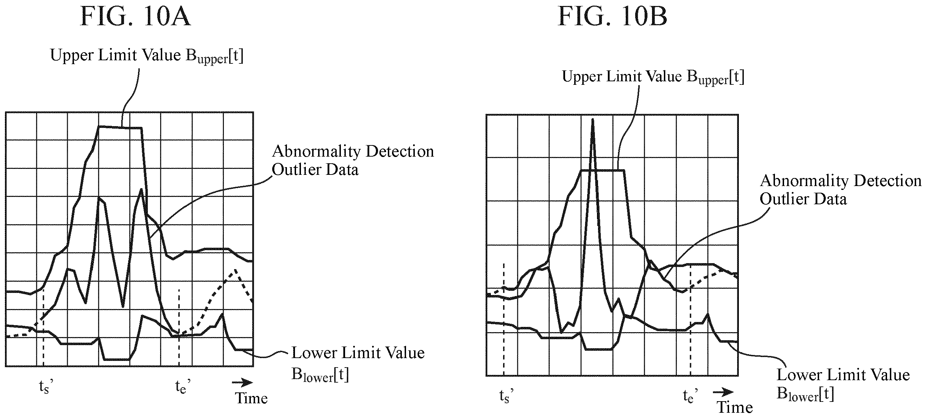

FIG. 10A is an explanatory diagram illustrating a waveform of abnormality detection outlier data $OD_{U,ts'-te'}$ when the abnormality determination processing unit 11 determines that equipment is operating normally.

FIG. 10B is an explanatory diagram illustrating a waveform of abnormality detection outlier data $OD_{U,ts'-te'}$ when the abnormality determination processing unit 11 determines that equipment is operating abnormally.

In FIGS. 10A and 10B, the horizontal axis indicates time $t$. The vertical axis indicates a value of abnormality detection outlier data $OD_{U,ts'-te'}$ at time $t$, and an upper limit value $B_{upper}[t]$ and a lower limit value $B_{lower}[t]$ of a normal range indicated by a bandpass at time $t$.

When the waveform of abnormality detection outlier data $OD_{U,ts'-te'}$ is equal to or more than the lower limit value $B_{lower}[t]$ of the bandpass and equal to or less than the upper limit value $B_{upper}[t]$ of the bandpass over the entire period $ts'-te'$, the abnormality determination processing unit 11 determines that the equipment is operating normally because the waveform is included in the normal range.

The waveform of abnormality detection outlier data $OD_{U,ts'-te'}$ illustrated in FIG. 10A is equal to or more than the lower limit value $B_{lower}[t]$ and equal to or less than the upper limit value $B_{upper}[t]$ over the entire period $ts'-te'$. Therefore, the abnormality determination processing unit 11 determines that the equipment is operating normally.

When the waveform of abnormality detection outlier data $OD_{U,ts'-te'}$ is less than the lower limit value $B_{lower}[t]$ at any time $t$ in the period $ts'-te'$, or more than the upper limit value $B_{upper}[t]$ at any time $t$, the abnormality determination processing unit 11 determines that the equipment is operating abnormally because the waveform deviates from the normal range.

The waveform of abnormality detection outlier data $OD_{U,ts'-te'}$ illustrated in FIG. 10B is more than the upper limit value $B_{upper}[t]$ three times. Therefore, the abnormality determination processing unit 11 determines that the equipment is operating abnormally.

Here, when the waveform of abnormality detection outlier data $OD_{U,ts'-te'}$ is equal to or more than the lower limit value $B_{lower}[t]$ and equal to or less than the upper limit value $B_{upper}[t]$ over the entire period $ts'-te'$, the abnormality determination processing unit 11 determines that the equipment is operating normally. However, this is only an example. Even when the waveform of abnormality detection outlier data $OD_{U,ts'-te'}$ deviates from the normal range indicated by the band model, the abnormality determination processing unit 11 may determine that the equipment is operating normally as long as the outlier is within an allowable range.

This will be specifically described as follows.

The abnormality determination processing unit 11 prepares a variable $K$ having an initial value of 0.

When a value of abnormality detection outlier data $OD_{U,ts'-te'}$ is more than the upper limit value $B_{upper}[t]$ at each time $t$ in the period $ts'-te'$, the abnormality determination processing unit 11 adds " 1" to the variable $K$. Therefore, for example, when there are three times as time $t$ at which a value of abnormality detection outlier data $OD_{U,ts'-te'}$ is more than the upper limit value $B_{upper}[t]$, the abnormality determination processing unit 11 adds "3" to the variable $K$.

When a value of abnormality detection outlier data $OD_{U,ts'-te'}$ is less than the lower limit value $B_{lower}[t]$ at each time $t$ in the period $ts'-te'$, the abnormality determination processing unit 11 adds " 1" to the variable $K$. Therefore, for example, when there are two times as time $t$ at which a value of abnormality detection outlier data $OD_{U,ts'-te'}$ is less than the lower limit value $B_{lower}[t]$, the abnormality determination processing unit 11 adds "2" to the variable $K$.

As illustrated in the following formula (10), when a value obtained by multiplying the period $ts'-te'$ by a coefficient $\zeta$ ($0 \le \zeta < 1$) is equal to or more than the variable $K$, the abnormality determination processing unit 11 determines that the equipment is operating normally.

$$K \le |ts' - te'| \times \zeta \qquad (10)$$

When the value obtained by multiplying the period $ts'-te'$ by the coefficient $\zeta$ is less than the variable $K$, the abnormality determination processing unit 11 determines that the equipment is operating abnormally.

Note that the constant $\zeta$ may be stored in an internal memory of the abnormality determination processing unit 11 or may be given from the outside. When $\zeta = 0$, the allowable range is zero.

Here, as an example in which even when the waveform of abnormality detection outlier data $OD_{U,ts'-te'}$ deviates from the normal range indicated by the band model, the abnormality determination processing unit 11 determines that the equipment is operating normally as long as the outlier is within an allowable range, an example is described in which the abnormality determination processing unit 11 determines that the equipment is operating normally when formula (10) is satisfied.

However, this is only an example, and the following specific examples are also conceivable.

Even when the number of outliers of the waveform of abnormality detection outlier data $OD_{U,ts'-te'}$ from the normal range indicated by the band model is small, the width of each outlier may be large.

Meanwhile, even when the number of outliers of the waveform of abnormality detection outlier data $OD_{U,ts'-te'}$ from the normal range indicated by the band model is large, the width of each outlier may be small.

For example, it is conceivable that possibility that the equipment is operating normally is higher in a case where the number of outliers when the width of outlier is about 1% of the width of the band model is 2 to 3 times than in a case where the number of outliers when the width of outlier is about the same as the width of the band model is one time.

The abnormality determination processing unit 11 prepares a variable $G$ having an initial value of 0.

The abnormality determination processing unit 11 subtracts the upper limit value $B_{upper}[t]$ from a value of abnormality detection outlier data $OD_{U,ts'-te'}$ at each time $t$ in the period $ts'-te'$, and adds the value obtained by the subtraction to the variable $G$ when the value obtained by the subtraction is positive.

The abnormality determination processing unit 11 subtracts a value of abnormality detection outlier data

$OD_{U,ts'\text{-}te'}$ from the lower limit value $B_{lower}[t]$ at each time t in the period **ts'-te'**, and adds the value obtained by the subtraction to the variable **G** when the value obtained by the subtraction is positive.

The abnormality determination processing unit 11 determines that the equipment is operating normally when the variable **G** is equal to or less than the threshold Gth, and determines that the equipment is operating abnormally when the variable **G** is more than the threshold **Gth.**

The threshold **Gth** may be stored in an internal memory of the abnormality determination processing unit 11 or may be given from the outside.

As the threshold **Gth**, such a threshold **Gth** as illustrated in the following formula (11) or (12) can be used.

$$\mathbf{Gth} = (\max(\mathbf{B_{upper}}[t]) - \min(\mathbf{B_{lower}}[t])) \times \boldsymbol{\theta} \qquad (11)$$

In formula (11), $\max(\mathbf{B_{upper}}[t])$ represents a maximum value out of the upper limit values $\mathbf{B_{upper}}[t]$ in the period **ts'-te'**, $\min(\mathbf{B_{lower}}[t])$ represents a minimum value out of the lower limit values $\mathbf{B_{lower}}[t]$ in the period **ts'-te'**, and θ represents a coefficient equal to or more than 0. The coefficient θ may be stored in an internal memory of the abnormality determination processing unit 11 or may be given from the outside.

$$\begin{aligned} \text{Gth} &= \frac{(B_{upper}[ts'] - B_{lower}[ts']) + (B_{upper}[ts'+1] - B_{lower}[ts'+1]) + \cdots + (B_{upper}[te'] - B_{lower}[te'])}{h} \\ &\times \theta \end{aligned}$$

$$(12)$$

In formula (12), h represents the number of times **t** in the period **ts'-te'**.

In the abnormality detection device illustrated in FIG. 1, the outlier data extraction processing unit 7 extracts one piece of abnormality detection outlier data $OD_{U,ts'\text{-}te'}$ from among pieces of abnormality detection time-series data $D_{U,t}$.

However, this is only an example, and the outlier data extraction processing unit 7 may extract two or more pieces of abnormality detection outlier data $OD_{U,ts'\text{-}te'}$ having different detection periods **ts'-te'** from each other from among pieces of abnormality detection time-series data $D_{U,t}$.

When the outlier data extraction processing unit 7 extracts two or more pieces of abnormality detection outlier data $OD_{U,ts'\text{-}te'}$, the type determining unit 9, the waveform condition selecting unit 10, and the abnormality determination processing unit 11 perform the process described above for each of the pieces of abnormality detection outlier data $OD_{U,ts'\text{-}te'}$.

In the first embodiment described above, the abnormality detection device is configured in such a manner that the abnormality determining unit 8 collates a waveform of the abnormality detection outlier data extracted by the outlier data extracting unit 4 with a waveform condition for determining that a waveform indicating a change in the abnormality detection outlier data is a waveform obtained when equipment is operating normally, and determines whether or not the equipment is operating abnormally on the basis of a collation result between the waveform condition and the waveform of the abnormality detection outlier data. Therefore, the abnormality detection device can avoid occurrence of erroneous determination indicating that an abnormality has occurred in the equipment without preparing event information in advance.

In addition to an event that can be predicted in advance, there is an event that is difficult to predict. Therefore, event information cannot be prepared in advance in some cases.

Meanwhile, in the abnormality detection device illustrated in FIG. 1, it is necessary to prepare a waveform condition **Wp** in advance instead of preparing event information. Since the waveform condition **Wp** can be generated from learning time-series data $D_{G,n,t}$ obtained when the equipment is operating normally, it is easy to prepare the waveform condition **Wp** in advance.

In the abnormality detection device illustrated in FIG. 1, the waveform classifying unit 13 calculates the degree of similarity between one or more pieces of learning outlier data $OD_{G,n,ts\text{-}te}$ included in a group.

However, the lengths of the waveforms of one or more pieces of learning outlier data $OD_{G,n,ts\text{-}te}$ are not necessarily the same, but may be different.

For example, when the lengths of the waveforms of two pieces of learning outlier data $OD_{G,n,ts\text{-}te}$ are different, the waveform classifying unit 13 first aligns the beginning of a waveform having a shorter length with the beginning of a waveform having a longer length, and calculate a distance between the waveform having a shorter length and the waveform having a longer length.

The waveform classifying unit 13 repeatedly calculates a distance between the waveform having a shorter length and the waveform having a longer length while sliding the waveform having a shorter length in parallel to the waveform having a longer length until the end of the waveform having a shorter length coincides with the end of the waveform having a longer length.

The waveform classifying unit 13 selects a minimum distance out of all the calculated distances, and determines the degree of similarity corresponding to the selected distance as the degree of similarity between a piece of learning outlier data $OD_{G,n,ts\text{-}te}$ having a longer waveform length and a piece of learning outlier data $OD_{G,n,ts\text{-}}te$ having a shorter waveform length. As the degree of similarity corresponding to the distance, for example, an integral multiple of a reciprocal of the distance is conceivable.

When classifying pieces of learning outlier data $OD_{G,n,ts\text{-}te}$ having the degree of similarity equal to or higher than the threshold into the same group, the waveform classifying unit 13 specifies a slide position at which the degree of similarity of a piece of learning outlier data $OD_{G,n,ts\text{-}te}$ having a shorter waveform length with respect to a piece of learning outlier data $OD_{G,n,ts\text{-}te}$ having the longest waveform length is maximum.

The waveform classifying unit 13 disposes the piece of learning outlier data $OD_{G,n,ts\text{-}te}$ having a shorter waveform length at the slide position specified with respect to the piece of learning outlier data $OD_{G,n,ts\text{-}te}$ having the longest waveform length.

By disposing the piece of learning outlier data $OD_{G,n,ts\text{-}te}$ having a shorter waveform length at the specified slide position, the beginning of the piece of learning outlier data $OD_{G,n,ts\text{-}te}$ having a shorter waveform length may be located closer to the end than the beginning of the piece of learning outlier data $OD_{G,n,ts\text{-}te}$ having the longest waveform length.

By adding a piece of learning time-series data $D_{G,n,t}$ at a time earlier than the piece of learning outlier data $OD_{G,n,ts\text{-}te}$ having a shorter waveform length to a beginning side of the piece of learning outlier data $OD_{G,n,ts\text{-}te}$ having a shorter waveform length, the waveform classifying unit 13 aligns the beginning of the piece of learning outlier data $OD_{G,n,ts\text{-}te}$ having a shorter waveform length with the beginning of the piece of learning outlier data $OD_{G,n,ts\text{-}te}$ having the longest waveform length.

In addition, by disposing the piece of learning outlier data $OD_{G,n,ts\text{-}te}$ having a shorter waveform length at the specified slide position, the end of the piece of learning outlier data $OD_{G,n,ts\text{-}te}$ having a shorter waveform length may be located closer to a beginning side than the end of the piece of learning outlier data $OD_{G,n,ts\text{-}te}$ having the longest waveform length.

By adding a piece of learning time-series data $D_{G,n,t}$ at a time later than the piece of learning outlier data $OD_{G,n,ts\text{-}te}$ having a shorter waveform length to an end side of the piece of learning outlier data $OD_{G,n,ts\text{-}te}$ having a shorter waveform length, the waveform classifying unit 13 aligns the end of the piece of learning outlier data $OD_{G,n,ts\text{-}te}$ having a shorter waveform length with the end of the piece of learning outlier data $OD_{G,n,ts\text{-}te}$ having the longest waveform length.

The waveform classifying unit 13 classifies the same pieces of learning outlier data $OD_{G,n,ts\text{-}te}$ having the same waveform length into the same group.

In the abnormality detection device illustrated in FIG. 1, the waveform classifying unit 13 classifies pieces of learning outlier data $OD_{G,n,ts\text{-}te}$ having the degree of similarity equal to or higher than the threshold into the same group.

An observed value of a sensor may be the outside air temperature or the seawater temperature, or the observed value of the sensor may be affected by external factors from other equipment. In these cases, since a waveform related to an event appears in a long-term trend of the learning outlier data $OD_{G,n,ts\text{-}te}$, even when pieces of the learning outlier data $OD_{G,n,ts\text{-}te}$ have similar waveforms or change widths to each other, ranges of observed values may be different from each other.

When the ranges of observed values included in the pieces of learning outlier data $OD_{G,n,ts\text{-}te}$ are different from each other, the waveform classifying unit 13 may classify the pieces of learning outlier data $OD_{G,n,ts\text{-}te}$ into different groups because the pieces of learning outlier data $OD_{G,n,ts\text{-}te}$ are not similar to each other.

Therefore, the waveform classifying unit 13 calculates a mean value M of waveforms of each of the one or more pieces of learning outlier data $OD_{G,n,ts\text{-}te}$ whose waveforms have been determined to be of the same type by the type determining unit 9.

The waveform classifying unit 13 subtracts the mean value M of waveforms of each of the one or more pieces of learning outlier data $OD_{G,n,ts\text{-}te}$ from a value at each time t.

When the waveform classifying unit 13 subtracts the mean value M of waveforms of each of the one or more pieces of learning outlier data $OD_{G,n,ts\text{-}te}$ from a value at each time t, the ranges of observed values included in the one or more pieces of learning outlier data $OD_{G,n,ts\text{-}te}$ can be the same.

In addition, when a change width of the one or more pieces of learning outlier data $OD_{G,n,ts\text{-}te}$ is also affected by external factors, the waveform classifying unit 13 may divide a value of each of the one or more pieces of learning outlier data $OD_{G,n,ts\text{-}te}$ at each time $t$ by a standard deviation of the pieces of learning outlier data $OD_{G,n,ts\text{-}te}$.

By dividing a value of each of the one or more pieces of learning outlier data $OD_{G,n,ts\text{-}te}$ at each time $t$ by the standard deviation, the influence of external factors can be reduced.

In addition, the one or more pieces of learning outlier data $OD_{G,n,ts-te}$ may fluctuate in a time direction. For example, in an event waveform that appears in temperature data, the speed of temperature rise is high and the speed of temperature fall is slow in summer. On the contrary, the speed of temperature rise is low, and the speed of temperature fall is high in winter.

When the one or more pieces of learning outlier data $OD_{G,n,ts-te}$ fluctuate in the time direction, the waveform classifying unit 13 calculates a DTW distance between the one or more pieces of learning outlier data $OD_{G,n,ts-te}$ by using a dynamic time warping method.

By expanding and contracting each of waveforms of the one or more pieces of learning outlier data $OD_{G,n,ts-te}$ according to an expansion and contraction path obtained by calculating the DTW distance, the waveform classifying unit 13 can eliminate the fluctuation of the learning outlier data $OD_{G,n,ts-te}$ in the time direction. The expansion and contraction path indicates time corresponding to one or more pieces of learning outlier data $OD_{G,n,ts-te}$ obtained when a distance between the one or more pieces of learning outlier data $OD_{G,n,ts-te}$ is a minimum. Since a process itself for expanding and contracting the waveform of learning outlier data $OD_{G,n,ts-te}$ according to an expansion and contraction path is a known technique, detailed description thereof is omitted.

In the abnormality detection device illustrated in FIG. 1, the waveform condition generation processing unit 14 calculates an upper limit value $B_{upper}[t]$ of a band model or the like by using a mean value $P_{mean}[t]$ of one or more pieces of learning outlier data $OD_{G,n,ts-te}$ included in a group at each time **t.**

However, this is only an example, and instead of using a mean value $P_{mean}[t]$ at time **t**, the waveform condition generation processing unit 14 may use an observed value at time **t** included in a representative piece of learning outlier data $OD_{G,n,ts-te}$ out of one or more pieces of learning outlier data $OD_{G,n,ts-te}$ included in a group.

As the representative piece of learning outlier data $OD_{G,n,ts-te}$, a piece of learning outlier data $OD_{G,n,ts-te}$ having the highest degree of similarity to mean outlier data of one or more pieces of learning outlier data $OD_{G,n,ts-te}$ included in a group can be used.

In the abnormality detection device illustrated in FIG. 1, the waveform condition generation processing unit 14 calculates an upper limit value $B_{upper}[t]$ and a lower limit value $B_{lower}[t]$ of a normal range indicated by a band model.

The waveform condition generation processing unit 14 may extend the normal range indicated by the band model by calculating a margin of the normal range from a width of the normal range, and adding the margin to the normal range.

This will be specifically described as follows.

As illustrated in the following formula (13), the waveform condition generation processing unit 14 calculates a margin **r** of the normal range from the width of the normal range indicated by the band model.

$$r = (\max(B_{upper}[t]) - \min(B_{lower}[t])) \times \eta \qquad (13)$$

In formula (13), $\max(B_{upper}[t])$ represents a maximum value out of upper limit values $B_{upper}[t]$ in the period **ts-te**, $\min(B_{lower}[t])$ represents a minimum value out of lower limit values $B_{lower}[t]$ in the period **ts-te**, and $\eta$ represents a coefficient equal to or more than 0. The coefficient $\eta$ may be stored in an internal memory of the waveform condition generation processing unit 14 or may be given from the outside.

The waveform condition generation processing unit 14 extends the normal range by adding the margin **r** to the upper limit value $B_{upper}[t]$ as illustrated in the following formula (14) and subtracting the margin **r** from the lower limit value $B_{lower}[t]$ as illustrated in the following formula (15).

$$B_{upper}[t] \leftarrow B_{upper}[t] + r \qquad (14)$$

$$B_{lower}[t] \leftarrow B_{lower}[t] - r \qquad (15)$$

Here, the waveform condition generation processing unit 14 calculates the margin **r** of the normal range according to formula (13). However, this is only an example, and the waveform condition generation processing unit 14 may calculate the margin **r** of the normal range according to the following formula (16).

$$r = \frac{(B_{upper}[ts] - B_{lower}[ts]) + (B_{upper}[ts+1] - B_{lower}[ts+1]) + \cdots + (B_{upper}[te] - B_{lower}[te])}{p} \times \eta$$

$$(16)$$

In formula (16), p represents the number of times t in the period **ts-te.**

Second embodiment.

In the abnormality detection device illustrated in FIG. 1, the waveform condition generation processing unit 14 generates a band model indicating a normal range of a waveform as a waveform condition **Wp.**

In the second embodiment, an abnormality detection device will be described in which the waveform condition generation processing unit 14 generates a histogram indicating a time period in which learning outlier data $OD_{G,n,ts-te}$ is generated when equipment is operating normally, as a waveform condition **Wp.**

The configuration of the abnormality detection device of the second embodiment is similar to the configuration of the abnormality detection device of the first embodiment, and the configuration diagram of the abnormality detection device of the second embodiment is illustrated in FIG. 1.

The waveform condition generation processing unit 14 generates, for each of groups provided by the waveform classifying unit 13, a histogram indicating a time period in which one or more pieces of learning outlier data $OD_{G,n,ts-te}$ included in the group are generated, as a waveform condition **Wp.**

The learning outlier data $OD_{G,n,ts-te}$ includes period information indicating a period **ts-te** in which a learning outlier score $S_{G,n,t}$ is equal to or more than a threshold $S_{th}$. The period information includes information indicating a start time when the learning outlier score $S_{G,n,t}$ becomes equal to or more than the threshold $S_{th}$, and information indicating an end time when the learning outlier score $S_{G,n,t}$ becomes equal to or less than the threshold $S_{th}$.

The information indicating the start time and the information indicating the end time each include not only information indicating a so-called time but also information indicating a date and information indicating a day of the week.

Since a process itself for generating a histogram is a known technique, detailed description thereof is omitted, but a histogram can be generated on the basis of the period **ts-te** indicated by the period information included in the learning outlier data $OD_{G,n,ts-te}$.

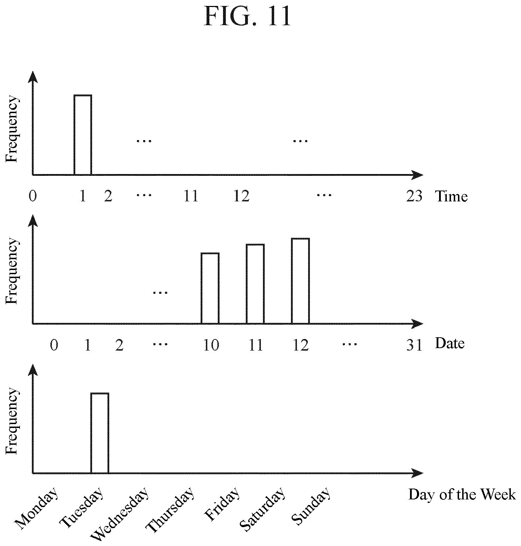

FIG. 11 is an explanatory diagram illustrating an example of a histogram generated by the waveform condition generation processing unit 14.

In FIG. 11, the horizontal axis indicates a time, a date, or a day of the week, and the vertical axis indicates a frequency at which learning outlier data $OD_{G,n,ts-te}$ occurs.

FIG. 11 illustrates an example in which the learning outlier data $OD_{G,n,ts-te}$ occurs between 1:00 and 2:00, the learning outlier data $OD_{G,n,ts-te}$ occurs on the 10th to 12th, and the learning outlier data $OD_{G,n,ts-te}$ occurs on Tuesday.

As in the first embodiment, the waveform condition selecting unit 10 calculates the degree of similarity between abnormality detection outlier data $OD_{U,ts'-te'}$ output from the type determining unit 9 and each of **N** pieces of learning outlier data $OD_{G,n,ts-te}$.

As in the first embodiment, the waveform condition selecting unit 10 searches for a piece of learning outlier data $OD_{G,n,ts-te}$ having the highest degree of similarity to the abnormality detection outlier data $OD_{U,ts'-te'}$ among **N** pieces of learning outlier data $OD_{G,n,ts-te}$.

As in the first embodiment, the waveform condition selecting unit 10 selects a waveform condition **Wp** corresponding to a group including the learning outlier data $OD_{G,n,ts-te}$ that has been searched for from among waveform conditions **Wp** corresponding to one or more groups stored by the waveform condition storing unit 15.

The waveform condition **Wp** selected by the waveform condition selecting unit 10 is a histogram generated by the waveform condition generation processing unit 14.

The waveform condition selecting unit 10 outputs the selected waveform condition **Wp** to the abnormality determination processing unit 11.

The abnormality determination processing unit 11 refers to period information included in the abnormality detection outlier data $OD_{U,ts'-te'}$ output from the outlier data extraction processing unit 7, and recognizes a period **ts'-te'** which is a time period in which abnormality detection outlier data $OD_{U,ts'-te'}$ occurs.

The abnormality determination processing unit 11 collates the period **ts'-te'** in which abnormality detection outlier data $OD_{U,ts'-te'}$ is generated with a generation time period indicated by a histogram which is a waveform condition **Wp** output from the waveform condition selecting unit 10.

The abnormality determination processing unit 11 determines that equipment is operating normally when the period **ts'-te'** in which the abnormality detection outlier data $OD_{U,ts'-te'}$ is generated is included in the generation time period indicated by the histogram.

In the example of FIG. 11, the abnormality determination processing unit 11 determines that equipment is operating normally when a time period in which the abnormality detection outlier data $OD_{U,ts'-te'}$ is generated is between 1:00 and 2:00, on any day of the 10th to 12th, and on Tuesday.

The abnormality determination processing unit 11 determines that equipment is operating abnormally when the period **ts'-te'** in which the abnormality detection outlier data $OD_{U,ts'-te'}$ is generated is not included in the generation time period indicated by the histogram.

In the example of FIG. 11, the abnormality determination processing unit 11 determines that equipment is operating abnormally when a time period in which the abnormality detection outlier data $OD_{U,ts'-te'}$ is generated is not between 1:00 and 2:00, not on any day of the 10th to 12th, or not on Tuesday.

In the second embodiment described above, the abnormality detection device is configured in such a manner that the abnormality determining unit 8 determines that equipment is operating normally when a time period in which abnormality detection outlier data extracted by the outlier data extracting unit 4 is generated is included in a generation time period indicated by a histogram, and determines that the equipment is operating abnormally when the time period in which the abnormality detection outlier data is generated is not included in the generation time period indicated by the histogram. Therefore, the abnormality detection device can avoid occurrence of erroneous determination indicating that an abnormality has occurred in the equipment without preparing event information in advance.

In the abnormality detection device of the second embodiment, the abnormality determination processing unit 11 determines that equipment is operating normally when a time period in which the abnormality detection outlier data $OD_{U,ts'-te'}$ is generated is included in the generation time period indicated by the histogram.

In the abnormality detection device of the second embodiment, as in the abnormality detection device of the first embodiment, the abnormality determination processing unit 11 determines whether or not the waveform of the abnormality detection outlier data $OD_{U,ts'-te'}$ is within a normal range of a bandpass over the entire period $ts'-te'$.

Then, the abnormality determination processing unit 11 may determine that equipment is operating normally when the time period in which the abnormality detection outlier data $OD_{U,ts'-te'}$ is generated is included in the generation time period indicated by the histogram, and the waveform of the abnormality detection outlier data $OD_{U,ts'-te'}$ is included in the normal range of the bandpass over the entire period $ts'-te'$.

Third embodiment.

In a third embodiment, an abnormality detection device including a selection accepting unit 17 for presenting waveform conditions **Wp** generated by the waveform condition generation processing unit 14 and accepting user's selection of an effective waveform condition **Wp** from among the presented waveform conditions **Wp** will be described.

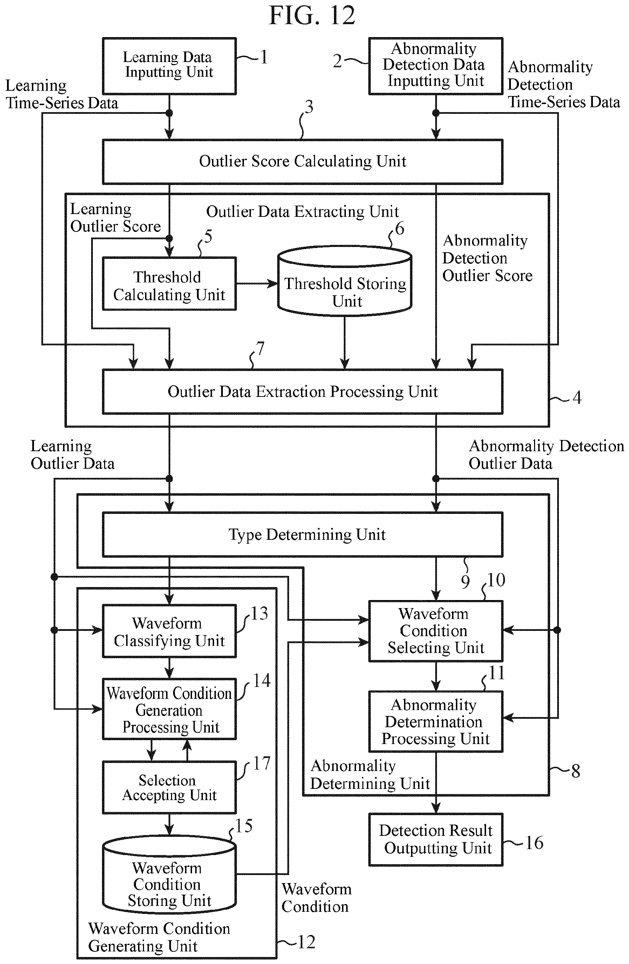

FIG. 12 is a configuration diagram illustrating the abnormality detection device according to the third embodiment.

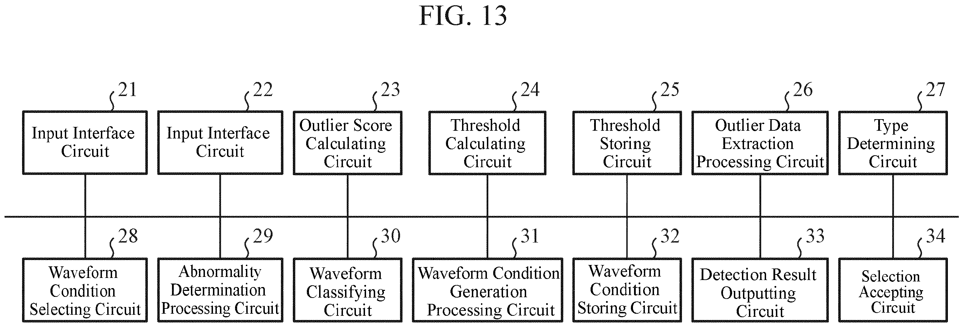

FIG. 13 is a hardware configuration diagram illustrating hardware of the abnormality detection device according to the third embodiment.

In FIGS. 12 and 13, the same reference numerals as in FIGS. 1 and 2 indicate the same or corresponding parts, and therefore description thereof is omitted.

The selection accepting unit 17 is achieved by, for example, a selection accepting circuit 34 illustrated in FIG. 13.

The selection accepting unit 17 presents waveform conditions **Wp** generated by the waveform condition generation processing unit 14 and accepts user's selection of an effective waveform condition **Wp** from among the presented waveform conditions **Wp.**

The selection accepting unit 17 leaves only an effective waveform condition **Wp** whose selection has been accepted as a waveform condition **Wp** generated by the waveform condition generation processing unit 14, and discards a waveform condition **Wp** whose selection has not been accepted.

In FIG. 12, it is assumed that each of the learning data inputting unit 1, the abnormality detection data inputting unit 2, the outlier score calculating unit 3, the threshold calculating unit 5, the threshold storing unit 6, the outlier data extraction processing unit 7, the type determining unit 9, the waveform condition selecting unit 10, the abnormality determination processing unit 11, the waveform classifying unit 13, the waveform condition generation processing unit 14, the waveform condition storing unit 15, the detection result outputting unit 16, and the selection accepting unit 17, which are constituent elements of the abnormality detection device, is achieved by dedicated hardware as illustrated in FIG. 13. That is, it is assumed that the abnormality detection device is achieved by the input interface circuit 21, the input interface circuit 22, the outlier score calculating circuit 23, the threshold calculating circuit 24, the threshold storing circuit 25, the outlier data extraction processing circuit 26, the type determining circuit 27, the waveform condition selecting circuit 28, the abnormality determination processing circuit 29, the waveform classifying circuit 30, the waveform condition generation processing circuit 31, the waveform condition storing circuit 32, the detection result outputting circuit 33, and the selection accepting circuit 34.

Here, for example, to each of the input interface circuit 21, the input interface circuit 22, the outlier score calculating circuit 23, the threshold calculating circuit 24, the outlier data extraction processing circuit 26, the type determining circuit 27, the waveform condition selecting circuit 28, the abnormality determination processing circuit 29, the waveform classifying circuit 30, the waveform condition generation processing circuit 31, the detection result outputting circuit 33, and the selection accepting circuit 34, a single circuit, a composite circuit, a programmed processor, a parallel programmed processor, ASIC, FPGA, or a combination thereof is applicable.

The constituent elements of the abnormality detection device are not limited to those achieved by dedicated hardware, and the abnormality detection device may be achieved by software, firmware, or a combination of software and firmware.

When the abnormality detection device is achieved by software, firmware, or the like, the threshold storing unit 6 and the waveform condition storing unit 15 are configured on a memory 41 of a computer. A program for causing the computer to execute a processing procedure performed in the learning data inputting unit 1, the abnormality detection data inputting unit 2, the outlier score calculating unit 3, the threshold calculating unit 5, the outlier data extraction processing unit 7, the type determining unit 9, the waveform condition selecting unit 10, the abnormality determination processing unit 11, the waveform classifying unit 13, the waveform condition generation processing unit 14, the detection result outputting unit 16, and the selection accepting unit 17 is stored in the memory 41 illustrated in FIG. 3. Then, the processor 42 illustrated in FIG. 3 executes the program stored in the memory 41.

Next, an operation of the abnormality detection device illustrated in FIG. 12 will be described.

Provided that constituent elements other than the selection accepting unit 17 among the constituent elements of the abnormality detection device illustrated in FIG. 12 are similar to those of the abnormality detection device illustrated in FIG. 1, and therefore only an operation of the selection accepting unit 17 will be described here.

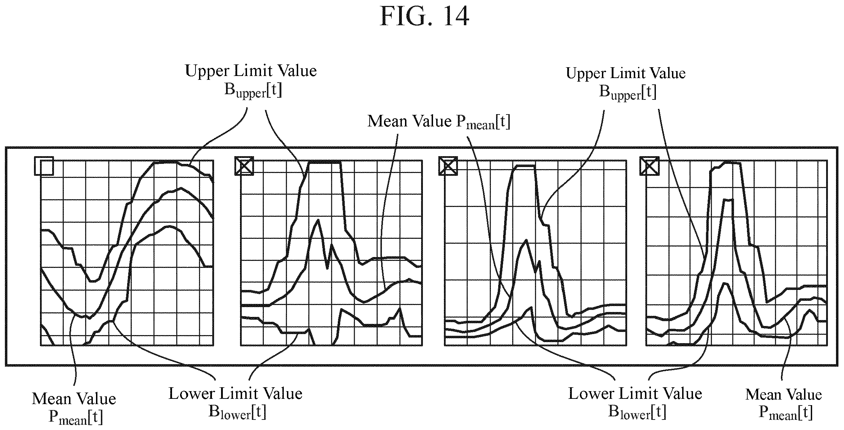

As illustrated in FIG. 14, the selection accepting unit 17 displays one or more waveform conditions **Wp** generated by the waveform condition generation processing unit 14 on, for example, a display (not illustrated).

FIG. 14 is an explanatory diagram illustrating a list confirmation screen displaying a list of one or more waveform conditions **Wp** generated by the waveform condition generation processing unit 14.

A user can evaluate appropriateness of each of the waveform conditions **Wp** by confirming the list confirmation screen.

The list confirmation screen illustrated in FIG. 14 includes a check box corresponding to each of the waveform conditions **Wp.** By checking a check box corresponding to a waveform condition **Wp** determined to be appropriate among the check boxes corresponding to the respective waveform conditions **Wp**, a user can select an effective waveform condition **Wp.**

The list confirmation screen illustrated in FIG. 14 displays four waveform conditions **Wp.** In the drawing, the check boxes for the second to fourth waveform conditions **Wp** from the left are checked.

The selection accepting unit 17 accepts user's selection of a waveform condition **Wp** whose check box has been checked by a user among the one or more waveform conditions **Wp** generated by the waveform condition generation processing unit 14, as an effective waveform condition **Wp.**

The selection accepting unit 17 causes the waveform condition storing unit 15 to store only an effective waveform condition **Wp** whose selection has been accepted as a waveform condition **Wp** generated by the waveform condition generation processing unit 14.

The selection accepting unit 17 discards a waveform condition **Wp** whose selection has not been accepted, and does not causes the waveform condition storing unit 15 to store the waveform condition **Wp** whose selection has not been accepted.

The selection accepting unit 17 has a function of displaying learning outlier data $OD_{G,n,ts\text{-}te}$ from which the waveform conditions **Wp** displayed on the list confirmation screen have been generated on a display (not illustrated).

When a user clicks on any waveform condition **Wp** among the one or more waveform conditions **Wp** displayed on the list confirmation screen, the selection accepting unit 17 displays one or more pieces of learning outlier data $OD_{G,n,ts\text{-}te}$ from which the waveform condition **Wp** has been generated on a display (not illustrated).

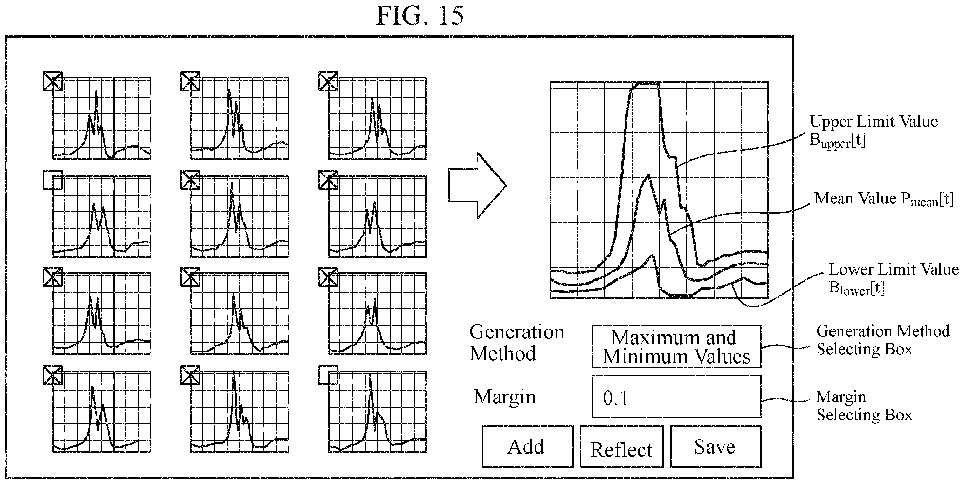

FIG. 15 is an explanatory diagram illustrating the list confirmation screen displaying the list of pieces of learning outlier data $OD_{G,n,ts\text{-}te}$ from which a waveform condition **Wp** has been generated.

The list confirmation screen illustrated in FIG. 15 displays 12 pieces of learning outlier data $OD_{G,n,ts\text{-}te}.$

By confirming the list confirmation screen, a user can determine a piece of learning outlier data $OD_{G,n,ts\text{-}te}$ which is considered to be unnecessary for generating a waveform condition **Wp** out of the 12 pieces of learning outlier data $OD_{G,n,ts\text{-}te}.$

The list confirmation screen illustrated in FIG. 15 includes check boxes corresponding to the respective pieces of learning outlier data $OD_{G,n,ts\text{-}te}.$ By unchecking a check box corresponding to a piece of learning outlier data $OD_{G,n,ts\text{-}te}$ which is considered to be unnecessary out of the check boxes corresponding to the respective pieces of learning outlier data $OD_{G,n,ts\text{-}te}$, a user can select a piece of learning outlier data $OD_{G,n,ts\text{-}te}$ which is considered to be unnecessary.

In the example of FIG. 15, the check box for the second piece of learning outlier data $OD_{G,n,ts\text{-}te}$ from the top in the leftmost column is unchecked. The check box for the fourth piece of learning outlier data $OD_{G,n,ts\text{-}te}$ from the top in the rightmost column is unchecked.

The selection accepting unit 17 accepts user's selection of a piece of learning outlier data $OD_{G,n,ts\text{-}te}$ whose check box is not unchecked out of the 12 pieces of learning outlier data $OD_{G,n,ts\text{-}te}.$

The waveform condition generation processing unit 14 regenerates a waveform condition **Wp** from a piece of learning outlier data $OD_{G,n,ts\text{-}te}$ whose selection has been accepted by the selection accepting unit 17.

The list confirmation screen illustrated in FIG. 15 includes a selection box for accepting user's selection of a method for generating a waveform condition **Wp** by the waveform condition generation processing unit 14.

In the generation method selecting box, a generation method for calculating an upper limit value $B_{upper}[t]$ and a lower limit value $B_{lower}[t]$ of a normal range indicated by a band model which is a waveform condition **Wp** can be selected by using a mean value $P_{mean}[t]$ and a standard deviation $P_{std}[t]$.

In addition, in the generation method selecting box, the generation method for calculating an upper limit value $B_{upper}[t]$ and a lower limit value $B_{lower}[t]$ of a normal range indicated by a band model can be selected by using a maximum value $P_{max}[t]$ and a minimum value $P_{min}[t]$.

Therefore, a user can select a method for generating a waveform condition **Wp** by operating the generation method selecting box.

The selection accepting unit 17 accepts user's selection of a method for generating a waveform condition **Wp,** the selection being caused by an operation of the generation method selecting box by a user.

The waveform condition generation processing unit 14 generates a waveform condition **Wp** from a piece of learning outlier data $OD_{G,n,ts\text{-}te}$ whose selection has been accepted by the selection accepting unit 17 on the basis of a generation method whose selection has been accepted by the selection accepting unit 17.

The list confirmation screen illustrated in FIG. 15 includes a margin selecting box for accepting user's selection of a margin of a normal range indicated by a band model.

Therefore, a user can select a margin by operating the margin selecting box.

The selection accepting unit 17 accepts user's selection of a margin, the selection being caused by an operation of the margin selecting box by a user.

The waveform condition generation processing unit 14 extends the normal range by adding a margin whose selection has been accepted by the selection accepting unit 17 to the normal range.

The list confirmation screen illustrated in FIG. 15 includes a "reflect" button, a "save" button, and an "add" button.

When a user clicks the "reflect" button, the waveform condition generation processing unit 14 regenerates a waveform condition **Wp** from a piece of learning outlier data $OD_{G,n,ts\text{-}te}$ whose selection has been accepted by the selection accepting unit 17, and operates so as to display the regenerated waveform condition **Wp** on the list confirmation screen.

When the user clicks the "save" button, it is operated in such a manner that the waveform condition **Wp** regenerated by the selection accepting unit 17 is stored in the waveform condition storing unit 15.

When the user clicks the "add" button, it is operated in such a manner that a piece of learning outlier data $OD_{G,n,ts\text{-}te}$ included in a group different from the group of the pieces of learning outlier data $OD_{G,n,ts\text{-}te}$ displayed on the list confirmation screen illustrated in FIG. 15 can be selected for regenerating a waveform condition **Wp.** Then, after the user clicks the "add" button, the user clicks a waveform condition **Wp** different from the previously clicked waveform condition **Wp** on the list confirmation screen illustrated in FIG. 14. When the user clicks on a different waveform condition **Wp,** the selection accepting unit 17 displays one or more pieces of learning outlier data $OD_{G,n,ts\text{-}te}$ from which the clicked waveform condition **Wp** has been generated on the list confirmation screen illustrated in FIG. 15.

In the list confirmation screen illustrated in FIG. 15, by checking a check box of a piece of learning outlier data $OD_{G,n,ts\text{-}te}$ which is considered to be added for regenerating a waveform condition **Wp,** the user can select the piece of learning outlier data $OD_{G,n,ts\text{-}te}$ which is considered to be added.

In the third embodiment described above, the abnormality detection device is configured in such a manner that the selection accepting unit 17 presents a waveform condition **Wp** generated by the waveform condition generation processing unit 14, accepts user's selection of an effective waveform condition **Wp** from among the presented waveform conditions **Wp,** leaves only the effective waveform condition **Wp** whose selection has been accepted as a waveform condition **Wp** generated by the waveform condition generation processing unit 14, and discards a waveform condition **Wp** whose selection has not been accepted. Therefore, the abnormality detection device can generate a waveform condition **Wp** reflecting determination of a user.

Fourth embodiment.

In a fourth embodiment, an abnormality detection device will be described in which the waveform condition generating unit 12 uses, as learning outlier data $OD_{G,n,ts\text{-}te}$, a piece of abnormality detection outlier data $OD_{U,ts'\text{-}te'}$ collated with a waveform condition **Wp** when the abnormality determining unit 8 determines that equipment is operating abnormally.

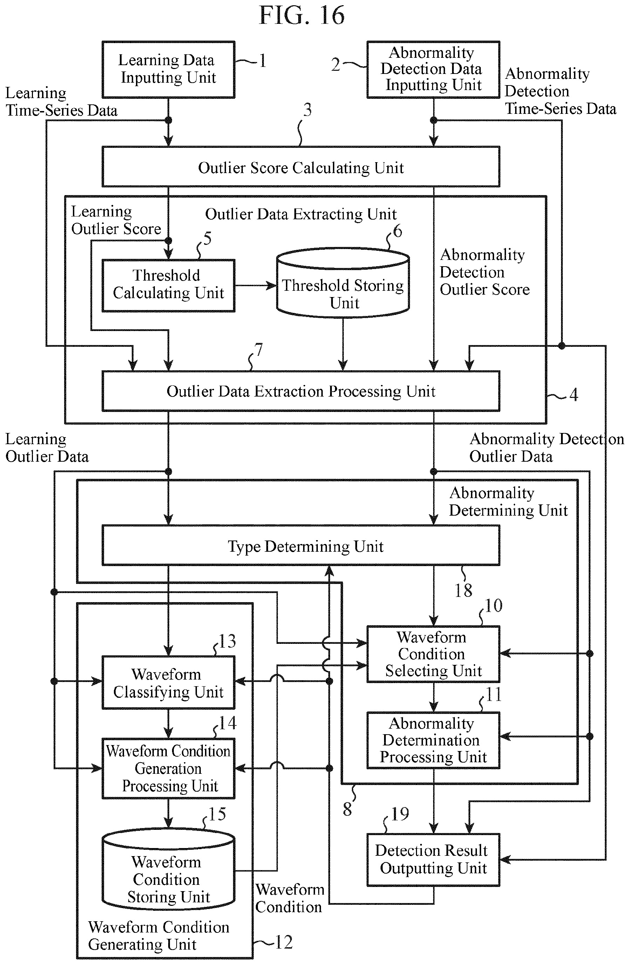

FIG. 16 is a configuration diagram illustrating the abnormality detection device according to the fourth embodiment.

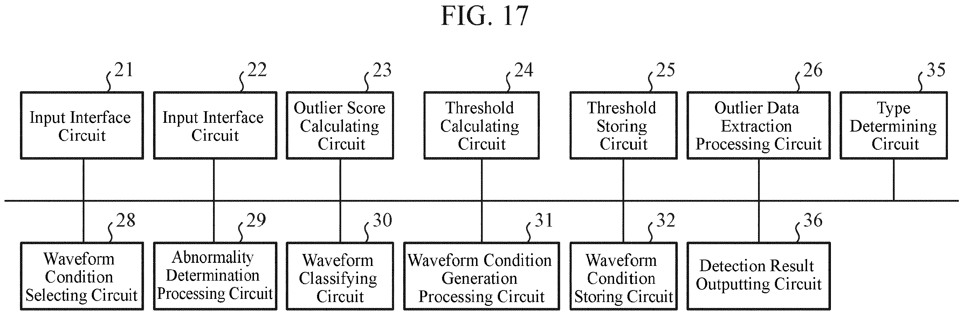

FIG. 17 is a hardware configuration diagram illustrating hardware of the abnormality detection device according to the fourth embodiment.

In FIGS. 16 and 17, the same reference numerals as in FIGS. 1 and 2 indicate the same or corresponding parts, and therefore description thereof is omitted.

A type determining unit 18 is achieved by, for example, a type determining circuit 35 illustrated in FIG. 17.

As in the type determining unit 9 illustrated in FIG. 1, the type determining unit 18 determines the type of learning outlier data $OD_{G,n,ts-te}$ extracted by the outlier data extraction processing unit 7.

As in the type determining unit 9 illustrated in FIG. 1, the type determining unit 18 determines the waveform type of abnormality detection outlier data $OD_{U,ts'-te'}$ extracted by the outlier data extraction processing unit 7.

The type determining unit 18 acquires, as learning outlier data $OD_{G,n,ts-te}$, a piece of abnormality detection outlier data $OD_{U,ts'-te'}$ collated with a waveform condition **Wp** from a detection result outputting unit 19 when the abnormality determination processing unit 11 determines that equipment is operating abnormally.

The type determining unit 18 calculates a feature amount of the acquired abnormality detection outlier data $OD_{U,ts'-te'}$, and determines the waveform type of the abnormality detection outlier data $OD_{U,ts'-te'}$ from the calculated feature amount. The type determining unit 18 outputs the determined waveform type of the abnormality detection outlier data $OD_{U,ts'-te'}$ to the waveform classifying unit 13.

The detection result outputting unit 19 is achieved by, for example, a detection result outputting circuit 36 illustrated in FIG. 17.

As in the detection result outputting unit 16 illustrated in FIG. 1, the detection result outputting unit 19 displays the determination result output from the abnormality determination processing unit 11 on, for example, a display (not illustrated).

The detection result outputting unit 19 displays a piece of abnormality detection outlier data $OD_{U,ts'-te'}$ collated with a waveform condition **Wp** and abnormality detection time-series data $D_{U,t}$ on, for example, a display when the abnormality determination processing unit 11 determines that equipment is operating abnormally.

The detection result outputting unit 19 accepts user's selection of a piece of abnormality detection outlier data $OD_{U,ts'-te'}$ used as learning outlier data $OD_{G,n,ts-te}$ among pieces of abnormality detection outlier data $OD_{U,ts'-te'}$ collated with a waveform condition **Wp** when the abnormality determination processing unit 11 determines that equipment is operating abnormally.

The detection result outputting unit 19 outputs, as learning outlier data $OD_{G,n,ts}$-te, the piece of abnormality detection outlier data $OD_{U,ts'-te'}$ whose selection has been accepted to each of the type determining unit 18, the waveform classifying unit 13, and the waveform condition generation processing unit 14.

In FIG. 16, it is assumed that each of the learning data inputting unit 1, the abnormality detection data inputting unit 2, the outlier score calculating unit 3, the threshold calculating unit 5, the threshold storing unit 6, the outlier data extraction processing unit 7, the type determining unit 18, the waveform condition selecting unit 10, the abnormality determination processing unit 11, the waveform classifying unit 13, the waveform condition generation processing unit 14, the waveform condition storing unit 15, and the detection result outputting unit 19, which are constituent elements of the abnormality detection device, is achieved by dedicated hardware as illustrated in FIG. 17. That is, it is assumed that the abnormality detection device is achieved by the input interface circuit 21, the input interface circuit 22, the outlier score calculating circuit 23, the threshold calculating circuit 24, the threshold storing circuit 25, the outlier data extraction processing circuit 26, the type determining circuit 35, the waveform condition selecting circuit 28, the abnormality determination processing circuit 29, the waveform classifying circuit 30, the waveform condition generation processing circuit 31, the waveform condition storing circuit 32, and the detection result outputting circuit 36.

Here, for example, to each of the input interface circuit 21, the input interface circuit 22, the outlier score calculating circuit 23, the threshold calculating circuit 24, the outlier data extraction processing circuit 26, the type determining circuit 35, the waveform condition selecting circuit 28, the abnormality determination processing circuit 29, the waveform classifying circuit 30, the waveform condition generation processing circuit 31, and the detection result outputting circuit 36, a single circuit, a composite circuit, a programmed processor, a parallel programmed processor, ASIC, FPGA, or a combination thereof is applicable.

The constituent elements of the abnormality detection device are not limited to those achieved by dedicated hardware, and the abnormality detection device may be achieved by software, firmware, or a combination of software and firmware.

When the abnormality detection device is achieved by software, firmware, or the like, the threshold storing unit 6 and the waveform condition storing unit 15 are configured on a memory 41 of a computer. A program for causing the computer to execute a processing procedure performed in the learning data inputting unit 1, the abnormality detection data inputting unit 2, the outlier score calculating unit 3, the threshold calculating unit 5, the outlier data extraction processing unit 7, the type determining unit 18, the waveform condition selecting unit 10, the abnormality determination processing unit 11, the waveform classifying unit 13, the waveform condition generation processing unit 14, and the detection result outputting unit 19 is stored in the memory 41 illustrated in FIG. 3. Then, the processor 42 illustrated in FIG. 3 executes the program stored in the memory 41.

Next, an operation of the abnormality detection device illustrated in FIG. 16 will be described.

As in the first embodiment, the abnormality determination processing unit 11 collates a waveform condition **Wp** selected by the waveform condition selecting unit 10 with a waveform of the abnormality detection outlier data $OD_{U,ts'-te'}$

extracted by the outlier data extraction processing unit 7.

As in the first embodiment, the abnormality determination processing unit 11 determines whether or not equipment is operating abnormally on the basis of a collation result between the waveform condition **Wp** and the waveform of abnormality detection outlier data $OD_{U,ts'-te'}$.

As in the first embodiment, the abnormality determination processing unit 11 outputs a determination result indicating whether or not the equipment is operating abnormally to the detection result outputting unit 19.

When determining that the equipment is operating abnormally, the abnormality determination processing unit 11 outputs a piece of abnormality detection outlier data $OD_{U,ts'-te'}$ collated with the waveform condition **Wp** to the detection result outputting unit 19.

The detection result outputting unit 19 displays the determination result output from the abnormality determination processing unit 11 on, for example, a display (not illustrated).

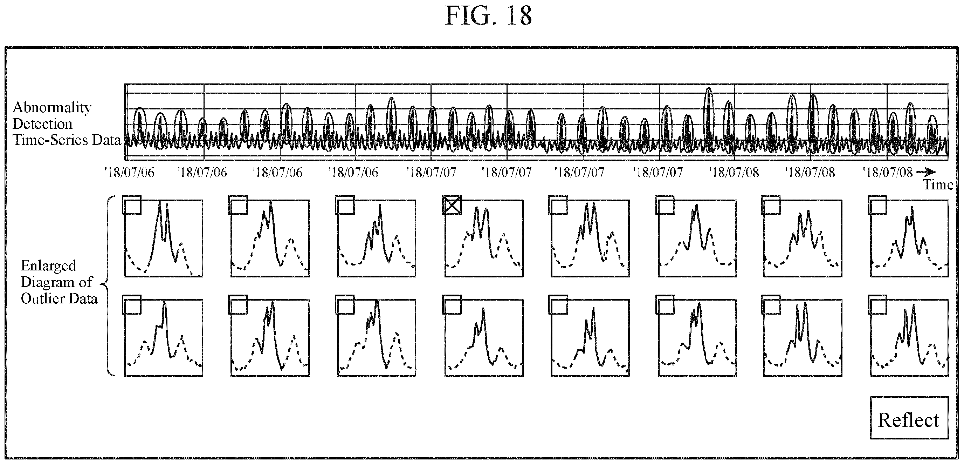

As illustrated in FIG. 18, the detection result outputting unit 19 displays pieces of abnormality detection outlier data $OD_{U,ts'-te'}$ collated with waveform conditions **Wp** and pieces of abnormality detection time-series data $D_{U,t}$ output from the abnormality detection data inputting unit 2 on, for example, a display when the abnormality determination processing unit 11 determines that equipment is operating abnormally.

FIG. 18 is an explanatory diagram illustrating an example of a data display screen displaying pieces of abnormality detection outlier data $OD_{U,ts'-te'}$ collated with waveform conditions **Wp** and pieces of abnormality detection time-series data $D_{U,t}$ when the abnormality determination processing unit 11 determines that equipment is operating abnormally.

In FIG. 18, out of pieces of abnormality detection time-series data $D_{U,t}$, a piece of data surrounded by ∘ is a piece of abnormality detection outlier data $OD_{U,ts'-te'}$ collated with a waveform condition **Wp** when the abnormality determination processing unit 11 determines that equipment is operating abnormally. Enlarged diagrams of the abnormality detection outlier data $OD_{U,ts'-te'}$ are also displayed on the screen illustrated in FIG. 18.

In the enlarged diagrams, the solid line part indicates abnormality detection outlier data $OD_{U,ts'-te'}$, and the broken line part indicates abnormality detection time-series data $D_{U,t}$ before and after the abnormality detection outlier data $OD_{U,ts'-te'}$.

In FIG. 18, in order to simplify the drawing, the number of enlarged diagrams of abnormality detection outlier data $OD_{U,ts'-te'}$ is smaller than the number of pieces of data surrounded by ∘.

The data display screen illustrated in FIG. 18 includes check boxes corresponding to the respective pieces of abnormality detection outlier data $OD_{U,ts'-te'}$. By checking a check box corresponding to a piece of abnormality detection outlier data $OD_{U,ts'-te'}$ which is desirably used as learning outlier data $OD_{G,\,n,\,ts-te}$, a user can select a piece of abnormality detection outlier data $OD_{U,ts'-te'}$ used as learning outlier data $OD_{G,\,n,\,ts-te}$.

In the example of FIG. 18, the check box for the fourth piece of abnormality detection outlier data $OD_{U,ts'-te'}$ from the left in the upper row is checked.

The detection result outputting unit 19 accepts, as learning outlier data $OD_{G,n,ts-te}$, user's selection of the piece of abnormality detection outlier data $OD_{U,ts'-te'}$ whose check box has been checked by a user.

The detection result outputting unit 19 outputs, as learning outlier data $OD_{G,n,ts-te}$, the piece of abnormality detection outlier data $OD_{U,ts'-te'}$ whose selection has been accepted to each of the type determining unit 18, the waveform classifying unit 13, and the waveform condition generation processing unit 14.

As in the type determining unit 9 illustrated in FIG. 1, the type determining unit 18 determines the type of learning outlier data $OD_{G,n,ts-te}$ extracted by the outlier data extraction processing unit 7, and outputs the type of learning outlier data $OD_{G,n,ts-te}$ to the waveform classifying unit 13.

As in the type determining unit 9 illustrated in FIG. 1, the type determining unit 18 determines the waveform type of abnormality detection outlier data $OD_{U,ts'-te'}$ extracted by the outlier data extraction processing unit 7, and outputs the waveform type of abnormality detection outlier data $OD_{U,ts'-te'}$ to the waveform condition selecting unit 10.

The type determining unit 18 acquires, as learning outlier data $OD_{G,n,ts-te}$, the abnormality detection outlier data $OD_{U,ts'-te'}$ output from the detection result outputting unit 19.

The type determining unit 18 calculates a feature amount of the acquired abnormality detection outlier data $OD_{U,ts'-te'}$, and determines the waveform type of the abnormality detection outlier data $OD_{U,ts'-te'}$ from the calculated feature amount.

A process for determining the waveform type of the abnormality detection outlier data $OD_{U,ts'-te'}$ is similar to the process for determining the waveform type of the learning outlier data $OD_{G,n,ts-te}$.

The type determining unit 18 outputs the determined waveform type of the abnormality detection outlier data $OD_{U,ts'-te'}$ to the waveform classifying unit 13.

Operations of the waveform classifying unit 13 and the waveform condition generation processing unit 14 are similar to those of the first embodiment except that abnormality detection outlier data $OD_{U,ts'-te'}$ output from the detection result outputting unit 19 is used as learning outlier data $OD_{G,n,ts-te}$.

In the fourth embodiment described above, the abnormality detection device is configured in such a manner that when the abnormality determining unit 8 determines that equipment is operating abnormally, the type determining unit 18 calculates a feature amount of abnormality detection outlier data collated with a waveform condition, and determines the waveform type of the abnormality detection outlier data collated with the waveform condition from the feature amount, and then, the waveform condition generating unit 12 generates, from waveforms of one or more pieces of outlier data whose waveforms have been determined to be of the same type by the type determining unit 18 out of the pieces of learning outlier data extracted by the outlier data extracting unit 4 and the pieces of abnormality detection outlier data collated with waveform conditions, a waveform condition corresponding to the type. Therefore, the abnormality detection device can increase the number of pieces of learning outlier data and improve the accuracy of waveform conditions corresponding to the types thereof as compared with the abnormality detection device of the first embodiment.

INDUSTRIAL APPLICABILITY

The present invention is suitable for an abnormality detection device and an abnormality detection method for determining whether or not equipment is operating abnormally.

REFERENCE SIGNS LIST

**1:**    learning data inputting unit,

**2:**    abnormality detection data inputting unit,

**3:**    outlier score calculating unit,

**4:**    outlier data extracting unit,

**5:**    threshold calculating unit,

**6:**    threshold storing unit,

**7:**    outlier data extraction processing unit,

**8:**    abnormality determining unit,

**9:**    type determining unit,

**10:**    waveform condition selecting unit,

**11:**    abnormality determination processing unit,

**12:**    waveform condition generating unit,

**13:**    waveform classifying unit,

**14:**    waveform condition generation processing unit,

**15:**    waveform condition storing unit,

**16:**    detection result outputting unit,

**17:**    selection accepting unit,

**18:**    type determining unit,

**19:**    detection result outputting unit,

**21:**    input interface circuit,

22: input interface circuit,

23: outlier score calculating circuit,

24: threshold calculating circuit,

25: threshold storing circuit,

26: outlier data extraction processing circuit,

27: type determining circuit,

28: waveform condition selecting circuit,

29: abnormality determination processing circuit,

30: waveform classifying circuit,

31: waveform condition generation processing circuit,

32: waveform condition storing circuit,

33: detection result outputting circuit,

34: selection accepting circuit,

35: type determining circuit,

36: detection result outputting circuit,

41: memory, and

42: processor

## Claims

1.  An abnormality detection device comprising:

    an outlier score calculating unit (3) for calculating, from abnormality detection time-series data indicating states of equipment which is an abnormality detection target at a plurality of times in time series, a degree of abnormality of the equipment at each of the plurality of times as an abnormality detection outlier score;
    an outlier data extracting unit (4) for extracting, from among pieces of the abnormality detection time-series data, a piece of abnormality detection time-series data in a time period in which an abnormality may have occurred in the equipment as abnormality detection outlier data on a basis of the abnormality detection outlier score at each of the plurality of times calculated by the outlier score calculating unit; and
    an abnormality determining unit (8) for collating a waveform of the abnormality detection outlier data extracted by the outlier data extracting unit with a waveform condition for determining that a waveform indicating a change in the abnormality detection outlier data is a waveform obtained when the equipment is operating normally, and determining whether or not the equipment is operating abnormally on a basis of a collation result between the waveform condition and the waveform of the abnormality detection outlier data,
    the abnormality determining unit includes:

    a type determining unit (9; 18) for calculating a feature amount of the abnormality detection outlier data extracted by the outlier data extracting unit and determining a waveform type of the abnormality detection outlier data from the feature amount;
    a waveform condition selecting unit (10) for selecting a waveform condition corresponding to the type determined by the type determining unit from among one or more waveform conditions; and

an abnormality determination processing unit (11) for collating the waveform condition selected by the waveform condition selecting unit with the waveform of the abnormality detection outlier data, and determining whether or not the equipment is operating abnormally on a basis of a collation result between the selected waveform condition and the waveform of the abnormality detection outlier data,

wherein the outlier score calculating unit (3) is configured to calculate, from each of one or more pieces of learning time-series data indicating states of the equipment at a plurality of times when the equipment is operating normally in time series, a degree of abnormality of the equipment at each of the plurality of times as a learning outlier score,

the outlier data extracting unit (4) is configured to extract, from among the pieces of learning time-series data, learning time-series data in a time period in which an abnormality may have occurred in the equipment as learning outlier data on a basis of the learning outlier score at each of the plurality of times calculated by the outlier score calculating unit;

the type determining unit (9; 18) is configured to calculate a feature amount of each of the pieces of learning outlier data extracted by the outlier data extracting unit, and to determine a waveform type of each of the pieces of learning outlier data from the feature amount of each of the pieces of learning outlier data, and

the abnormality detection device further comprises a waveform condition generating unit (12) for generating, from among waveforms of one or more pieces of learning outlier data whose waveforms have been determined to be of the same type by the type determining unit out of the pieces of learning outlier data extracted by the outlier data extracting unit, a waveform condition corresponding to the type.

2. The abnormality detection device according to claim 1, wherein

the waveform condition generating unit (12) is configured to classify the one or more pieces of learning outlier data whose waveforms have been determined to be of the same type by the type determining unit into groups on a basis of a degree of similarity between the waveforms of the one or more pieces of learning outlier data whose waveforms have been determined to be of the same type, and

to generate, for each of the groups, a waveform condition corresponding the group from the waveforms of the one or more pieces of learning outlier data included in the group, and

the waveform condition selecting unit (10) is configured to search, for a piece of learning outlier data having a highest degree of similarity to the abnormality detection outlier data extracted by the outlier data extracting unit among the pieces of learning outlier data extracted by the outlier data extracting unit, and to select a waveform condition corresponding to a group including the learning outlier data that has been searched for from among waveform conditions corresponding to the respective groups generated by the waveform condition generating unit.

3. The abnormality detection device according to claim 1, wherein

the waveform condition generating unit (12) is configured to generate a band model indicating a normal range of a waveform as the waveform condition, and

the abnormality determination processing unit (11) is configured to determine that the equipment is operating normally when the waveform of the abnormality detection outlier data extracted by the outlier data extracting unit is included in the normal range indicated by the band model, and to determine that the equipment is operating abnormally when the waveform of the abnormality detection outlier data deviates from the normal range indicated by the band model.

4. The abnormality detection device according to claim 3, wherein even when the waveform of the abnormality detection outlier data extracted by the outlier data extracting unit deviates from the normal range indicated by the band model, the abnormality determination processing unit is configured to determine that the equipment is operating normally as long as the outlier is within an allowable range.

5. The abnormality detection device according to claim 1, wherein the waveform condition generating unit is configured to generate, as the waveform condition, a histogram indicating a time period in which outlier data is generated when the equipment is operating normally, the abnormality determination processing unit is configured to determine that the equipment is operating normally when the time period in which the abnormality detection outlier data extracted by the outlier data extracting unit is generated is included in a generation time period indicated by the histogram, and to determine that the equipment is operating abnormally when the time period in which the abnormality detection outlier data is generated is not included in the generation time period indicated by the histogram.

6. The abnormality detection device according to claim 3, wherein the waveform condition generating unit is configured to generate the band model by using a mean value of waveforms of the respective pieces of learning outlier data extracted by the outlier data extracting unit and a standard deviation of the respective pieces of learning outlier data.

7. The abnormality detection device according to claim 3, wherein the waveform condition generating unit is configured to generate the band model by using a maximum value out of waveforms of the respective pieces of learning outlier data extracted by the outlier data extracting unit and a minimum value out of the waveforms of the respective pieces of learning outlier data.

8. The abnormality detection device according to claim 3, wherein the waveform condition generating unit is configured to extend a normal range indicated by the generated band model by calculating a margin of the normal range from a width of the normal range, and adding the margin to the normal range.

9. The abnormality detection device according to claim 2, wherein when lengths of the waveforms of one or more pieces of learning outlier data whose waveforms have been determined to be of the same type by the type determining unit are different, the waveform condition generating unit is configured to calculate a degree of similarity between a piece of learning outlier data having a longer waveform length and a piece of learning outlier data having a shorter waveform length for each of the pieces of learning outlier data while shifting a position of the waveform having a shorter length with respect to the waveform having a longer length, and to determine a maximum value out of the calculated degrees of similarity as a degree of similarity between the piece of learning outlier data having a longer waveform length and the piece of learning outlier data having a shorter waveform length.

10. The abnormality detection device according to claim 1, wherein the waveform condition generating unit is configured to calculate

a mean value of waveforms of the respective pieces of learning outlier data whose waveforms have been determined to be of the same type by the type determining unit, to subtract the mean value of the waveforms of the respective pieces of learning outlier data from each of the waveforms of the pieces of learning outlier data, and to generate a waveform condition corresponding to the type from each of the waveforms of the pieces of learning outlier data obtained by subtracting the mean value.

11. The abnormality detection device according to claim 10, wherein the waveform condition generating unit is configured to calculate

a standard deviation of waveforms of the respective pieces of learning outlier data whose waveforms have been determined to be of the same type by the type determining unit, to divide the waveform of each of the pieces of learning outlier data obtained by subtracting the mean value by the standard deviation of waveforms of the respective pieces of learning outlier data, and to generate a waveform condition corresponding to the type from each of the waveforms of the pieces of learning outlier data obtained by division by the standard deviation.

12. The abnormality detection device according to claim 1, wherein
the waveform condition generating unit includes a selection accepting unit (17) for presenting a waveform condition generated, accepting selection of only an effective waveform condition from among the presented waveform conditions, leaving only the effective waveform condition whose selection has been accepted as the waveform condition generated, and discarding a waveform condition whose selection has not been accepted.

13. The abnormality detection device according to claim 1, wherein

the type determining unit (18) is configured to calculate a feature amount of a piece of abnormality detection outlier data collated with a waveform condition when the abnormality determination processing unit determines that the equipment is operating abnormally, and is configured to determine a waveform type of the piece of abnormality detection outlier data collated with the waveform condition from the feature amount, and the waveform condition generating unit is configured to generate, from waveforms of one or more pieces of outlier data whose waveforms have been determined to be of the same type by the type determining unit out of the pieces of learning outlier data extracted by the outlier data extracting unit and the pieces of abnormality detection outlier data collated with the waveform condition, a waveform condition corresponding to the type.

**14.** An abnormality detection method comprising:

in an outlier score calculating unit (3), calculating, from abnormality detection time-series data indicating states of equipment which is an abnormality detection target at a plurality of times in time series, a degree of abnormality of the equipment at each of the plurality of times as an abnormality detection outlier score;

in an outlier data extracting unit (4), extracting, from among pieces of the abnormality detection time-series data, a piece of abnormality detection time-series data in a time period in which an abnormality may have occurred in the equipment as abnormality detection outlier data on a basis of the abnormality detection outlier score at each of the plurality of times calculated by the outlier score calculating unit;

in an abnormality determining unit (8), collating a waveform of the abnormality detection outlier data extracted by the outlier data extracting unit with a waveform condition for determining that a waveform indicating a change in the abnormality detection outlier data is a waveform obtained when the equipment is operating normally, and determining whether or not the equipment is operating abnormally on a basis of a collation result between the waveform condition and the waveform of the abnormality detection outlier data;

in a type determining unit (9; 18), calculating a feature amount of the abnormality detection outlier data extracted by the outlier data extracting unit and determining a waveform type of the abnormality detection outlier data from the feature amount;

in a waveform condition selecting unit, selecting a waveform condition corresponding to the type determined by the type determining unit from among one or more waveform conditions;

in an abnormality determination processing unit (11), collating the waveform condition selected by the waveform condition selecting unit with the waveform of the abnormality detection outlier data, and determining whether or not the equipment is operating abnormally on a basis of a collation result between the selected waveform condition and the waveform of the abnormality detection outlier data;

in the outlier score calculating unit, calculating, from each of one or more pieces of learning time-series data indicating states of the equipment at a plurality of times when the equipment is operating normally in time series, a degree of abnormality of the equipment at each of the plurality of times as a learning outlier score;

in the outlier data extracting unit, extracting, from among the pieces of learning time-series data, learning time-series data in a time period in which an abnormality may have occurred in the equipment as learning outlier data on a basis of the learning outlier score at each of the plurality of times calculated by the outlier score calculating unit;

in the type determining unit, calculating a feature amount of each of the pieces of learning outlier data extracted by the outlier data extracting unit, and determining a waveform type of each of the pieces of learning outlier data from the feature amount of each of the pieces of learning outlier data, and

in a waveform condition generating unit (12), generating, from among waveforms of one or more pieces of learning outlier data whose waveforms have been determined to be of the same type by the type determining unit out of the pieces of learning outlier data extracted by the outlier data extracting unit, a waveform condition corresponding to the type.

**Patentansprüche**

**1.** Anomalieerfassungseinrichtung, umfassend:

eine Ausreißerwert-Berechnungseinheit (3) zum Berechnen eines Grades von Anomalie eines Geräts zu jedem der Vielzahl von Zeitpunkten als Anomalieerfassungsausreißerwert aus Anomalieerfassungszeitreihendaten, die Zustände des Geräts angeben, das ein Anomalieerfassungsziel zu einer Vielzahl von Zeitpunkten in einer Zeitreihe ist;

eine Ausreißerdaten-Extrahierungseinheit (4) zum Extrahieren, aus Teilen der Anomalieerfassungszeitreihendaten, eines Stücks von Anomalieerfassungszeitreihendaten in einer Zeitperiode, in der eine Anomalie in dem Gerät aufgetreten sein kann, als Anomalieerfassungsausreißerdaten auf Grundlage des Anomalieerfassungsausreißerwerts zu jedem der Vielzahl von Zeitpunkten, der von der Ausreißerwert-Berechnungseinheit berechnet wird; und

eine Anomaliebestimmungseinheit (8) zum Zuordnen einer Wellenform der Anomalieerfassungsausreißerdaten, die durch die Ausreißerdaten-Extrahierungseinheit extrahiert werden, zu einer Wellenformbedingung, um zu bestimmen, dass eine Wellenform, die eine Änderung in den Anomalieerfassungsausreißerdaten angibt, eine Wellenform ist, die erhalten wird, wenn das Gerät normal arbeitet, und um auf Grundlage eines Zuordnungsergebnisses zwischen der Wellenformbedingung und der Wellenform der Anomalieerfassungsausreißerdaten zu bestimmen, ob das Gerät anormal arbeitet oder nicht,

wobei die Anomaliebestimmungseinheit aufweist:

eine Typbestimmungseinheit (9; 18) zum Berechnen einer Merkmalsmenge der von der Ausreißerdatenextrahierungseinheit extrahierten Anomalieerfassungsausreißerdaten und zum Bestimmen eines Wellenformtyps der Anomalieerfassungsausreißerdaten aus der Merkmalsmenge;
eine Wellenformbedingungsauswahleinheit (10) zum Auswählen einer Wellenformbedingung, die dem von der Typbestimmungseinheit bestimmten Typ entspricht, aus einer oder mehreren Wellenformbedingungen; und
eine Anomaliebestimmungsverarbeitungseinheit (11) zum Zuordnen der durch die Wellenformbedingungsauswahleinheit ausgewählten Wellenformbedingung zu der Wellenform der Anomalieerfassungsausreißerdaten und zum Bestimmen, auf Grundlage eines Zuordnungsergebnisses zwischen der ausgewählten Wellenformbedingung und der Wellenform der Anomalieerfassungsausreißerdaten, ob das Gerät anormal arbeitet oder nicht,
wobei die Ausreißerwert-Berechnungseinheit (3) eingerichtet ist zum Berechnen, aus jedem von einem oder mehreren Stücken von Lernzeitreihendaten, die Zustände des Geräts zu einer Vielzahl von Zeitpunkten angeben, wenn das Gerät normal in Zeitreihen arbeitet, eines Grades von Anomalie des Geräts zu jedem der Vielzahl von Zeitpunkten als Lernausreißerwert,
die Ausreißerdaten-Extrahierungseinheit (4) eingerichtet ist zum Extrahieren, aus den Teilen von Lernzeitreihendaten, von Lernzeitreihendaten in einer Zeitperiode, in der eine Anomalie in dem Gerät aufgetreten sein kann, als Lernausreißerdaten auf Grundlage des Lernausreißerwerts zu jedem der Vielzahl von Zeitpunkten, der von der Ausreißerwert-Berechnungseinheit berechnet wird;
die Typbestimmungseinheit (9; 18) eingerichtet ist zum Berechnen einer Merkmalsmenge jedes der Teile von durch die Ausreißerdaten-Extrahierungseinheit extrahierten Lernausreißerdaten und zum Bestimmen eines Wellenformtyps jedes der Teile von Lernausreißerdaten aus der Merkmalsmenge jedes der Teile von Lernausreißerdaten, und
die Anomalieerfassungseinrichtung ferner eine Wellenformbedingung-Erzeugungseinheit (12) umfasst, zum Erzeugen, aus Wellenformen eines oder mehrerer Stücke von Lernausreißerdaten, deren Wellenformen von der Typbestimmungseinheit aus den Stücken von Lernausreißerdaten, die von der Ausreißerdaten-Extrahierungseinheit extrahiert werden, als vom gleichen Typ bestimmt worden sind, einer Wellenformbedingung, die dem Typ entspricht.

2. Anomalieerfassungseinrichtung nach Anspruch 1, wobei

die Wellenformbedingung-Erzeugungseinheit (12) eingerichtet ist zum Klassifizieren in Gruppen des einen oder der mehreren Stücke von Lernausreißerdaten, deren Wellenformen von der Typbestimmungseinheit bestimmt wurden, vom selben Typ zu sein, auf Grundlage eines Ähnlichkeitsgrads zwischen den Wellenformen des einen oder der mehreren Stücke von Lernausreißerdaten, deren Wellenformen bestimmt wurden, vom gleichen Typ zu sein, und
zum Erzeugen, für jede der Gruppen, einer der Gruppe entsprechenden Wellenformbedingung aus den Wellenformen der einen oder mehreren in der Gruppe enthaltenen Stücke von Lernausreißerdaten, und
die Wellenformbedingungsauswahleinheit (10) eingerichtet ist, nach einem Stück von Lernausreißerdaten mit einem höchsten Ähnlichkeitsgrad mit den durch die Ausreißerdaten-Extrahierungseinheit extrahierten Anomalieerfassungsausreißerdaten unter den Stücken von Lernausreißerdaten, die durch die Ausreißerdaten-Extrahierungsseinheit extrahiert werden, zu suchen und eine Wellenformbedingung, die einer Gruppe entspricht, die die Lernausreißerdaten enthält, nach denen gesucht wurde, aus Wellenformbedingungen auszuwählen, die den jeweiligen Gruppen entsprechen, die durch die Wellenformbedingung-Erzeugungseinheit erzeugt werden.

3. Anomalieerfassungseinrichtung nach Anspruch 1, wobei

die Wellenformbedingungserzeugungseinheit (12) eingerichtet ist, ein Bandmodell zu erzeugen, das einen normalen Bereich einer Wellenform als die Wellenformbedingung angibt, und
die Anomaliebestimmungsverarbeitungseinheit (11) eingerichtet ist, zu bestimmen, dass das Gerät normal arbeitet, wenn die Wellenform der Anomalieerfassungsausreißerdaten, die durch die Ausreißerdaten-Extrahierungseinheit extrahiert werden, in dem normalen Bereich enthalten ist, der durch das Bandmodell angegeben wird, und zu bestimmen, dass das Gerät anormal arbeitet, wenn die Wellenform der Anomalieerfassungsausreißerdaten von dem normalen Bereich abweicht, der durch das Bandmodell angegeben wird.

4. Anomalieerfassungseinrichtung nach Anspruch 3, wobei selbst wenn die Wellenform der Anomalieerfassungsausreißerdaten, die durch die Ausreißerdaten-Extrahierungseinheit extrahiert werden, von dem normalen Bereich abweicht, der durch das Bandmodell angegeben wird, die Anomaliebestimmungsverarbeitungseinheit eingerichtet ist, zu bestimmen, dass das Gerät normal arbeitet, solange der Ausreißer innerhalb eines zulässigen Bereichs liegt.

5. Anomalieerfassungseinrichtung nach Anspruch 1, wobei

die Wellenformbedingungserzeugungseinheit eingerichtet ist, als die Wellenformbedingung ein Histogramm zu erzeugen, das eine Zeitperiode angibt, in der Ausreißerdaten erzeugt werden, wenn das Gerät normal arbeitet, die Anomaliebestimmungsverarbeitungseinheit eingerichtet ist, zu bestimmen, dass das Gerät normal arbeitet, wenn die Zeitperiode, in der die Anomalieerfassungsausreißerdaten erzeugt werden, die durch die Ausreißerdaten-Extrahierungseinheit extrahiert werden, in einer Erzeugungszeitperiode enthalten ist, die durch das Histogramm angegeben wird, und zu bestimmen, dass das Gerät anormal arbeitet, wenn die Zeitperiode, in der die Anomalieerfassungsausreißerdaten erzeugt werden, nicht in der Erzeugungszeitperiode enthalten ist, die durch das Histogramm angegeben wird.

6. Anomalieerfassungseinrichtung nach Anspruch 3, wobei die Wellenformbedingungserzeugungseinheit eingerichtet ist, das Bandmodell unter Verwendung eines Mittelwerts der Wellenformen der jeweiligen Stücke von Lernausreißerdaten, die durch die Ausreißerdaten-Extrahierungseinheit extrahiert werden, und einer Standardabweichung der jeweiligen Stücke von Lernausreißerdaten zu erzeugen.

7. Anomalieerfassungseinrichtung nach Anspruch 3, wobei die Wellenformbedingungserzeugungseinheit eingerichtet ist, das Bandmodell unter Verwendung eines Maximalwerts aus Wellenformen der jeweiligen Stücke von Lernausreißerdaten, die durch die Ausreißerdaten-Extrahierungseinheit extrahiert werden, und eines Minimalwerts aus den Wellenformen der jeweiligen Stücke von Lernausreißerdaten zu erzeugen.

8. Anomalieerfassungseinrichtung nach Anspruch 3, wobei die Wellenformbedingungserzeugungseinheit eingerichtet ist, einen normalen Bereich, der durch das erzeugte Bandmodell angegeben wird, zu erweitern, indem sie einen Rand des normalen Bereichs aus einer Breite des normalen Bereichs berechnet und den Rand zu dem normalen Bereich addiert.

9. Anomalieerfassungseinrichtung nach Anspruch 2, wobei, wenn Längen der Wellenformen von einem oder mehreren Stücken von Lernausreißerdaten, deren Wellenformen von der Typbestimmungseinheit als vom gleichen Typ bestimmt worden sind, unterschiedlich sind, die Wellenformbedingungserzeugungseinheit eingerichtet ist, einen Ähnlichkeitsgrad zwischen einem Stück von Lernausreißerdaten mit einer längeren Wellenformlänge und einem Stück von Lernausreißerdaten mit einer kürzeren Wellenformlänge für jedes der Stücke von Lernausreißerdaten zu berechnen, während sie eine Position der Wellenform mit einer kürzeren Länge in Bezug auf die Wellenform mit einer längeren Länge verschiebt, und einen Maximalwert aus den berechneten Ähnlichkeitsgraden als einen Ähnlichkeitsgrad zwischen dem Stück von Lernausreißerdaten mit einer längeren Wellenformlänge und dem Stück von Lernausreißerdaten mit einer kürzeren Wellenformlänge zu bestimmen.

10. Anomalieerfassungseinrichtung nach Anspruch 1, wobei die Wellenformbedingungserzeugungseinheit eingerichtet ist, einen Mittelwert von Wellenformen der jeweiligen Stücke von Lernausreißerdaten zu berechnen, deren Wellenformen durch die Typbestimmungseinheit als vom gleichen Typ bestimmt worden sind, um den Mittelwert der Wellenformen der jeweiligen Stücke von Lernausreißerdaten von jeder der Wellenformen der Stücke von Lernausreißerdaten zu subtrahieren und eine Wellenformbedingung entsprechend dem Typ aus jeder der Wellenformen der Stücke von Lernausreißerdaten die durch Subtraktion des Mittelwerts erhalten werden, zu erzeugen.

11. Anomalieerfassungseinrichtung nach Anspruch 10, wobei die Wellenformbedingungserzeugungseinheit eingerichtet ist, eine Standardabweichung von Wellenformen der jeweiligen Stücke von Lernausreißerdaten zu berechnen, deren Wellenformen durch die Typbestimmungseinheit als vom gleichen Typ bestimmt worden sind, um die Wellenform jedes der jeweiligen Stücke von Lernausreißerdaten, die durch Subtrahieren des Mittelwerts erhalten werden, durch die Standardabweichung von Wellenformen der jeweiligen Stücke von Lernausreißerdaten zu dividieren und eine Wellenformbedingung entsprechend dem Typ aus jeder der Wellenformen der Stücke von Lernausreißerdaten zu erzeugen, die durch Division durch die Standardabweichung erhalten werden.

12. Anomalieerfassungseinrichtung nach Anspruch 1, wobei die Wellenformbedingungserzeugungseinheit eine Auswahlannahmeeinheit (17) aufweist zum Präsentieren einer erzeugten Wellenformbedingung, zum Annehmen einer Auswahl ausschließlich einer effektiven Wellenformbedingung aus den präsentierten Wellenformbedingungen, zum Belassen ausschließlich der effektiven Wellenformbedingung, deren Auswahl angenommen wurde, als die erzeugte Wellenformbedingung, und zum Verwerfen einer Wellenformbedingung, deren Auswahl nicht angenommen wurde.

13. Anomalieerfassungseinrichtung nach Anspruch 1, wobei

die Typbestimmungseinheit (18) eingerichtet ist, eine Merkmalsmenge eines Stücks von Anomalieerfassungsausreißerdaten, die einer Wellenformbedingung zugeordnet sind, zu berechnen, wenn die Anomaliebestimmungsverarbeitungseinheit bestimmt, dass das Gerät anormal arbeitet, und eingerichtet ist, einen Wellenformtyp des Stücks von Anomalieerfassungsausreißerdaten, die der Wellenformbedingung zugeordnet sind, aus der Merkmalsmenge zu bestimmen, und

die Wellenformbedingungserzeugungseinheit eingerichtet ist, aus Wellenformen eines oder mehrerer Stücke von Ausreißerdaten, deren Wellenformen von der Typbestimmungseinheit aus den von der Ausreißerdaten-Extrahierungseinheit extrahierten Stücken von Lernausreißerdaten und den der Wellenformbedingung zugeordneten Anomalieerfassungsausreißerdaten als vom selben Typ bestimmt werden, eine dem Typ entsprechende Wellenformbedingung zu erzeugen.

14. Anomalieerfassungsverfahren, umfassend:

in einer Ausreißerwert-Berechnungseinheit (3) Berechnen eines Anomaliegrads eines Geräts zu jedem einer Vielzahl von Zeitpunkten als Anomalieerfassungsausreißerwert aus Anomalieerfassungszeitreihendaten, die Zustände des Geräts angeben, das ein Anomalieerfassungsziel zu der Vielzahl von Zeitpunkten in einer Zeitreihe ist;

in einer Ausreißerdaten-Extrahierungseinheit (4) Extrahieren, aus Teilen der Anomalieerfassungszeitreihendaten, eines Stücks von Anomalieerfassungszeitreihendaten in einer Zeitperiode, in der eine Anomalie in dem Gerät aufgetreten sein kann, als Anomalieerfassungsausreißerdaten auf Grundlage des Anomalieerfassungsausreißerwerts zu jedem der Vielzahl von Zeitpunkten, der von der Ausreißerwert-Berechnungseinheit berechnet wird;

in einer Anomaliebestimmungseinheit (8) Zuordnen einer Wellenform der Anomalieerfassungsausreißerdaten, die durch die Ausreißerdaten-Extrahierungseinheit extrahiert werden, zu einer Wellenformbedingung, um zu bestimmen, dass eine Wellenform, die eine Änderung in den Anomalieerfassungsausreißerdaten angibt, eine Wellenform ist, die erhalten wird, wenn das Gerät normal arbeitet, und um auf Grundlage eines Zuordnungsergebnisses zwischen der Wellenformbedingung und der Wellenform der Anomalieerfassungsausreißerdaten zu bestimmen, ob das Gerät anormal arbeitet oder nicht;

in einer Typbestimmungseinheit (9; 18) Berechnen einer Merkmalsmenge der von der Ausreißerdatenextrahierungseinheit extrahierten Anomalieerfassungsausreißerdaten und Bestimmen eines Wellenformtyps der Anomalieerfassungsausreißerdaten aus der Merkmalsmenge;

in einer Wellenformbedingungsauswahleinheit Auswählen einer Wellenformbedingung, die dem von der Typenbestimmungseinheit bestimmten Typ entspricht, aus einer oder mehreren Wellenformbedingungen;

in einer Anomaliebestimmungsverarbeitungseinheit (11) Zuordnen der durch die Wellenformbedingungsauswahleinheit ausgewählten Wellenformbedingung zu der Wellenform der Anomalieerfassungsausreißerdaten und Bestimmen, auf Grundlage eines Zuordnungsergebnisses zwischen der ausgewählten Wellenformbedingung und der Wellenform der Anomalieerfassungsausreißerdaten, ob das Gerät anormal arbeitet oder nicht;

in der Ausreißerwert-Berechnungseinheit Berechnen eines Anomaliegrads des Geräts zu jedem der Vielzahl von Zeitpunkten als Lernausreißerwert aus jedem von einem oder mehreren Stücken von Lernzeitreihendaten, die Zustände des Geräts zu einer Vielzahl von Zeitpunkten angeben, wenn das Gerät normal in Zeitreihen arbeitet;

in der Ausreißerdaten-Extrahierungseinheit Extrahieren, aus den Stücken von Lernzeitreihendaten, von Lernzeitreihendaten in einer Zeitperiode, in der eine Anomalie in dem Gerät aufgetreten sein kann, als Lernausreißerdaten auf Grundlage des Lernausreißerwerts zu jedem der Vielzahl von Zeitpunkten, der von der Ausreißerwert-Berechnungseinheit berechnet wird;

in der Typbestimmungseinheit Berechnen einer Merkmalsmenge jedes der Stücke von durch die Ausreißerdaten-Extrahierungseinheit extrahierten Lernausreißerdaten und Bestimmen eines Wellenformtyps jedes der Stücke von Lernausreißerdaten aus der Merkmalsmenge jedes der Teile von Lernausreißerdaten, und

in einer Wellenformbedingung-Erzeugungseinheit (12) Erzeugen, aus Wellenformen eines oder mehrerer Stücke von Lernausreißerdaten, deren Wellenformen von der Typbestimmungseinheit aus den Stücken von Lernausreißerdaten, die von der Ausreißerdaten-Extrahierungseinheit extrahiert werden, als vom gleichen Typ bestimmt worden sind, einer Wellenformbedingung, die dem Typ entspricht.

**Revendications**

1. Dispositif de détection d'anomalie comprenant :

une unité de calcul de score de valeur aberrante (3) pour calculer, à partir de séries temporelles de données de détection d'anomalie indiquant les états d'un équipement qui est une cible de détection d'anomalie à une pluralité de moments dans des séries temporelles, un degré d'anomalie de l'équipement à chacun de la pluralité de moments en tant que score de valeur aberrante de détection d'anomalie ;

une unité d'extraction de données de valeur aberrante (4) pour extraire, parmi des éléments des séries temporelles de données de détection d'anomalie, un élément de séries temporelles de données de détection d'anomalie dans une période de temps au cours de laquelle une anomalie a pu se produire dans l'équipement en tant que données de valeur aberrante de détection d'anomalie sur la base du score de valeur aberrante de détection d'anomalie à chacun de la pluralité de moments calculé par l'unité de calcul de score de valeur aberrante ; et

une unité de détermination d'anomalie (8) pour collationner une forme d'onde des données de valeur aberrante de détection d'anomalie extraites par l'unité d'extraction de données de valeur aberrante avec une condition de forme d'onde pour déterminer qu'une forme d'onde indiquant un changement dans les données de valeur aberrante de détection d'anomalie est une forme d'onde obtenue lorsque l'équipement fonctionne normalement, et pour déterminer si l'équipement fonctionne ou non anormalement sur la base d'un résultat de collation entre la condition de la forme d'onde et la forme d'onde des données de valeur aberrante de détection d'anomalie, l'unité de détermination d'anomalie inclut :

une unité de détermination de type (9 ; 18) pour calculer une quantité caractéristique des données de valeur aberrante de détection d'anomalie extraites par l'unité d'extraction de données de valeur aberrante et pour déterminer un type de forme d'onde des données de valeur aberrante de détection d'anomalie à partir de la quantité caractéristique ;

une unité de sélection d'état de forme d'onde (10) pour sélectionner une condition de forme d'onde correspondant au type déterminé par l'unité de détermination de type parmi une ou plusieurs conditions de forme d'onde ; et

une unité de traitement de détermination d'anomalie (11) pour collationner la condition de forme d'onde sélectionnée par l'unité de sélection de condition de forme d'onde avec la forme d'onde des données de valeur aberrante de détection d'anomalie, et pour déterminer si l'équipement fonctionne ou non anormalement sur la base d'un résultat de collation entre la condition de la forme d'onde sélectionnée et la forme d'onde des données de valeur aberrante de détection d'anomalie,

dans lequel l'unité de calcul de score de valeur aberrante (3) est configurée pour calculer, à partir de chacun d'un ou plusieurs éléments de séries temporelles de données d'apprentissage indiquant les états de l'équipement à une pluralité de moments lorsque l'équipement fonctionne normalement dans les séries temporelles, un degré d'anomalie de l'équipement à chacun de la pluralité de moments en tant que score de valeur aberrante d'apprentissage,

une unité d'extraction de données de valeur aberrante (4) est configuré pour extraire, parmi les éléments de séries temporelles de données d'apprentissage, des séries temporelles de données d'apprentissage dans une période de temps dans lesquelles une anomalie a pu se produire dans l'équipement en tant que données de valeur aberrante d'apprentissage sur la base du score de valeur aberrante d'apprentissage à chacun de la pluralité de moments calculé par l'unité de calcul de score de valeur aberrante ;

l'unité de détermination de type (9 ; 18) est configurée pour calculer une quantité caractéristique de chacun des éléments de données de valeur aberrante d'apprentissage extraites par l'unité d'extraction de données de valeur aberrante, et de déterminer un type de forme d'onde de chacun des éléments de données de valeur aberrante d'apprentissage à partir de la quantité caractéristique de chacun des éléments de données de valeur aberrante d'apprentissage, et

le dispositif de détection d'anomalie comprend en outre une unité de génération de condition de forme d'onde (12) pour générer, parmi des formes d'onde d'un ou plusieurs éléments de données de valeur aberrante d'apprentissage dont les formes d'onde ont été déterminées comme étant du même type par l'unité de détermination de type parmi les éléments de données de valeur aberrante d'apprentissage extraites par l'unité d'extraction de données de valeur aberrante, une condition de forme d'onde correspondant au type.

**2.** Dispositif de détection d'anomalie selon la revendication 1, dans lequel

l'unité de génération de condition de forme d'onde (12) est configurée pour classifier le ou les éléments de données de valeur aberrante d'apprentissage dont les formes d'onde ont été déterminées comme étant du même type par l'unité de détermination de type dans des groupes sur la base d'un degré de similitude entre les formes d'onde du ou des éléments de données de valeur aberrante d'apprentissage dont les formes d'onde ont été déterminées comme étant du même type, et

de générer, pour chacun des groupes, une condition de forme d'onde correspondant au groupe à partir du ou des éléments de données de valeur aberrante d'apprentissage inclus dans le groupe, et

l'unité de sélection de condition de forme d'onde (10) est configurée pour chercher, pour un élément de données de valeur aberrante d'apprentissage ayant le degré de similitude le plus élevé vis-à-vis des données de valeur aberrante de détection d'anomalie extraites par l'unité d'extraction de données de valeur aberrante parmi les éléments de données de valeur aberrante d'apprentissage extraites par l'unité d'extraction de données de valeur aberrante, et pour sélectionner une condition de forme d'onde correspondant à un groupe incluant les données de valeur aberrante d'apprentissage qui a été cherché parmi les états de forme d'onde correspondant aux groupes respectifs générés par l'unité de génération de la condition de forme d'onde.

**3.** Dispositif de détection d'anomalie selon la revendication 1, dans lequel

l'unité de génération de condition de forme d'onde (12) est configurée pour générer un modèle de bande indiquant une plage normale d'une forme d'onde en tant que condition de forme d'onde, et

l'unité de traitement de détermination d'anomalie (11) est configurée pour déterminer que l'équipement fonctionne normalement lorsque la forme d'onde des données de valeur aberrante de détection d'anomalie extraites par l'unité d'extraction de données de valeur aberrante est incluse dans la plage normale indiquée par le modèle de bande, et pour déterminer que l'équipement fonctionne anormalement lorsque la forme d'onde des données de valeur aberrante de détection d'anomalie s'écarte de la plage normale indiquée par le modèle de bande.

**4.** Dispositif de détection d'anomalie selon la revendication 3, dans lequel même lorsque la forme d'onde des données de valeur aberrante de détection d'anomalie extraites par l'unité d'extraction de données de valeur aberrante dévie de la plage normale indiquée par le modèle de bande, l'unité de traitement de détermination d'anomalie est configurée pour déterminer que l'équipement fonctionne normalement tant que la valeur aberrante se situe dans une plage permise.

**5.** Dispositif de détection d'anomalie selon la revendication 1, dans lequel

l'unité de génération de condition de forme d'onde est configurée pour générer, en tant que condition de forme d'onde, un histogramme indiquant une période de temps pendant laquelle des données de valeur aberrante sont générées lorsque l'équipement fonctionne normalement,

l'unité de traitement de détermination d'anomalie est configurée pour déterminer que l'équipement fonctionne normalement lorsque la période de temps au cours de laquelle sont générées les données de valeur aberrante de détection d'anomalie extraites par l'unité d'extraction de données de valeur aberrante est incluse dans une période de temps de génération indiquée par l'histogramme, et de déterminer que l'équipement fonctionne anormalement lorsque la période de temps pendant laquelle sont générées les données de valeur aberrante de détection d'anomalie n'est pas incluse pendant la période de temps de génération indiquée par l'histogramme.

**6.** Dispositif de détection d'anomalie selon la revendication 3, dans lequel l'unité de génération de condition de forme d'onde est configurée pour générer le modèle de bande en utilisant une valeur moyenne des formes d'onde des éléments respectifs des données de valeur aberrante d'apprentissage extraites par l'unité d'extraction de données de valeur aberrante et un écart type des éléments respectifs des données de valeur aberrante d'apprentissage.

**7.** Dispositif de détection d'anomalie selon la revendication 3, dans lequel l'unité de génération de condition de forme d'onde est configurée pour générer le modèle de bande en utilisant une valeur maximum des formes d'onde des éléments respectifs des données de valeur aberrante d'apprentissage extraites par l'unité d'extraction de données de valeur aberrante et une valeur minimum des formes d'onde des éléments respectifs des données de valeur aberrante d'apprentissage.

**8.** Dispositif de détection d'anomalie selon la revendication 3, dans lequel l'unité de génération de condition de forme d'onde est configurée pour étendre une plage normale indiquée par le modèle de bande généré en calculant une marge de la plage normale à partir d'une largeur de la plage normale, et en ajoutant la marge à la plage normale.

9. Dispositif de détection d'anomalie selon la revendication 2, dans lequel lorsque les longueurs des formes d'onde du ou des éléments de données de valeur aberrante d'apprentissage dont les formes d'onde ont été déterminées comme étant du même type par l'unité de détermination de type sont différentes, l'unité de génération de condition de forme d'onde est configurée pour calculer un degré de similitude entre un élément de données de valeur aberrante d'apprentissage présentant une longueur de forme d'onde plus longue et un élément de données de valeur aberrante d'apprentissage présentant une longueur de forme d'onde plus courte pour chacun des éléments de données de valeur aberrante d'apprentissage, tout en décalant une position de la forme d'onde présentant une longueur plus courte par rapport à la forme d'onde présentant une longueur plus longue, et pour déterminer une valeur maximale parmi les degrés de similitude calculés en tant que degré de similitude entre l'élément de données de valeur aberrante d'apprentissage présentant une longueur de forme d'onde plus longue et l'élément de données de valeur aberrante d'apprentissage présentant une longueur de forme d'onde plus courte.

10. Dispositif de détection d'anomalie selon la revendication 1, dans lequel

l'unité de génération de condition de forme d'onde est configurée pour calculer une valeur moyenne des formes d'onde des éléments respectifs des données de valeur aberrante d'apprentissage dont les formes d'onde ont été déterminées comme étant du même type par l'unité de détermination de type, pour soustraire la valeur moyenne des formes d'onde des éléments respectifs des données de valeur aberrante d'apprentissage de chacune des formes d'onde des éléments de données de valeur aberrante d'apprentissage, et pour générer une condition de forme d'onde correspondant au type à partir de chacune des formes d'onde des éléments de données de valeur aberrante d'apprentissage obtenues en soustrayant la valeur moyenne.

11. Dispositif de détection d'anomalie selon la revendication 10, dans lequel l'unité de génération de condition de forme d'onde est configurée pour calculer un écart type des formes d'onde des éléments respectifs des données de valeur aberrante d'apprentissage dont les formes d'onde ont été déterminées comme étant du même type par l'unité de détermination de type, pour diviser la forme d'onde de chacun des éléments de données de valeur aberrante d'apprentissage obtenues en soustrayant la valeur moyenne par l'écart type des formes d'onde des éléments respectifs de données de valeur aberrante d'apprentissage, et pour générer une condition de forme d'onde correspondant au type à partir de chacune des formes d'onde des éléments de données de valeur aberrante d'apprentissage obtenues par la division par l'écart type.

12. Dispositif de détection d'anomalie selon la revendication 1, dans lequel
l'unité de génération de condition de forme d'onde inclut une unité d'acceptation de sélection (17) pour présenter une condition de forme d'onde générée, accepter la sélection d'une seule condition de forme d'onde pertinente parmi les conditions de forme d'onde présentées, laisser seulement la condition de forme d'onde pertinente dont la sélection a été acceptée en tant que condition de forme d'onde générée, et rejeter une condition de forme d'onde dont la sélection n'a pas été acceptée.

13. Dispositif de détection d'anomalie selon la revendication 1, dans lequel

l'unité de détermination de type (18) est configurée pour calculer une quantité caractéristique d'un élément de données de valeur aberrante de détection d'anomalie collationné avec une condition de forme d'onde, lorsque l'unité de traitement de détermination d'anomalie détermine que l'équipement fonctionne anormalement, et est configurée afin de déterminer un type de forme d'onde de l'élément de données de valeur aberrante de détection d'anomalie collationné avec la condition de forme d'onde de la quantité caractéristique, et
l'unité de génération de condition de forme d'onde est configurée pour générer, parmi des formes d'onde d'un ou de plusieurs éléments de données de valeur aberrante d'apprentissage dont on a déterminé que les formes d'onde étaient du même type par l'unité de détermination de type parmi les éléments de données de valeur aberrante d'apprentissage extraites par l'unité d'extraction de données de valeur aberrante et les éléments de données de valeur aberrante de détection d'anomalie collationnés avec l'état de forme d'onde, une condition de forme d'onde correspondant au type.

14. Procédé de détection d'anomalie comprenant les étapes suivantes :

dans une unité de calcul de résultat de valeur aberrante (3), calculer, à partir de séries temporelles de données de détection d'anomalie indiquant les états d'un équipement qui est une cible de détection d'anomalie à une pluralité de moments dans des séries temporelles, un degré d'anomalie du matériel à chacun de la pluralité de moments en tant que résultat de valeur aberrante de détection d'anomalie ;

dans une unité d'extraction de données de valeur aberrante (4), extraire, parmi des éléments des séries temporelles de données de détection d'anomalie, un élément de séries temporelles de données de détection d'anomalie dans une période de temps dans laquelle une anomalie a pu se produire dans l'équipement en tant que données de valeur aberrante de détection d'anomalie sur la base du résultat de valeur aberrante de détection d'anomalie à chacun de la pluralité de moments calculé par l'unité de calcul de résultat de valeur aberrante ;

dans une unité de détermination d'anomalie (8), collationner une forme d'onde des données de valeur aberrante de détection d'anomalie extraites par l'unité d'extraction de données de valeur aberrante avec une condition de forme d'onde pour déterminer qu'une forme d'onde indiquant une modification des données de valeur aberrante de détection d'anomalie est une forme d'onde obtenue lorsque l'équipement fonctionne normalement, et de déterminer si l'équipement fonctionne ou non anormalement sur la base d'un résultat de collation entre la condition de forme d'onde et la forme d'onde des données de valeur aberrante de détection d'anomalie ;

dans une unité de détermination de type (9 ; 18), calculer une quantité caractéristique des données de valeur aberrante de détection d'anomalie extraites par l'unité d'extraction de données de valeur aberrante et déterminer un type de forme d'onde des données de valeur aberrante de détection d'anomalie à partir de la quantité caractéristique ;

dans une unité de sélection de condition de forme d'onde, sélectionner une condition de forme d'onde correspondant au type déterminé par l'unité de détermination de type parmi une ou plusieurs conditions de forme d'onde ;

dans une unité de traitement de détermination d'anomalie (11), collationner la condition de forme d'onde sélectionnée par l'unité de sélection de condition de forme d'onde avec la forme d'onde des données de valeur aberrante de détection d'anomalie, et déterminer si l'équipement fonctionne ou non anormalement sur la base d'un résultat de collation entre la condition de forme d'onde sélectionnée et la forme d'onde des données de valeur aberrante de détection d'anomalie ;

dans l'unité de calcul de résultat de valeur aberrante, calculer, à partir de chacun éléments de séries temporelles de données d'apprentissage indiquant les états de l'équipement à une pluralité de moments lorsque l'équipement fonctionne normalement dans les séries temporelles, un degré d'anomalie de l'équipement à chacun de la pluralité de moments en tant que résultat de valeur aberrante d'apprentissage ;

dans l'unité d'extraction de données de valeur aberrante, extraire, parmi des éléments de séries temporelles de données d'apprentissage, des séries temporelles de données d'apprentissage dans lesquelles une anomalie a pu se produire dans l'équipement en tant que données de valeur aberrante d'apprentissage sur la base du résultat de valeur aberrante d'apprentissage à chacun de la pluralité de moments calculé par l'unité de calcul de résultat de valeur aberrante ;

dans l'unité de détermination de type, calculer une quantité caractéristique de chacun des éléments de données de valeur aberrante d'apprentissage extraites par l'unité d'extraction de données de valeur aberrante, et déterminer un type de forme d'onde de chacun des éléments de données de valeur aberrante d'apprentissage à partir de la quantité caractéristique de chacun des éléments de données de valeur aberrante d'apprentissage, et dans une unité de génération de condition de forme d'onde (12), générer, parmi des formes d'onde d'un ou de plusieurs éléments de données de valeur aberrante d'apprentissage dont les formes d'onde ont été déterminées comme étant du même type par l'unité de détermination de type parmi les éléments de données de valeur aberrante d'apprentissage extraites par l'unité d'extraction de données de valeur aberrante, une condition de forme d'onde correspondant au type.

# FIG. 1

Learning Data Inputting Unit ~1

Learning Time-Series Data

2~ Abnormality Detection Data Inputting Unit

Abnormality Detection Time-Series Data

3

Outlier Score Calculating Unit

Learning Outlier Score

Outlier Data Extracting Unit

5

Threshold Calculating Unit

6

Threshold Storing Unit

Abnormality Detection Outlier Score

7

Outlier Data Extraction Processing Unit

~4

Learning Outlier Data

Abnormality Detection Outlier Data

Type Determining Unit

9

10

13

Waveform Classifying Unit

Waveform Condition Selecting Unit

14

Waveform Condition Generation Processing Unit

11

Abnormality Determination Processing Unit

15

Waveform Condition Storing Unit

Waveform Condition

Abnormality Determining Unit

~8

Detection Result Outputting Unit ~16

Waveform Condition Generating Unit ~12

## FIG. 2

| | | | | | | |
|---|---|---|---|---|---|---|
| Input Interface Circuit (21) | Input Interface Circuit (22) | Outlier Score Calculating Circuit (23) | Threshold Calculating Circuit (24) | Threshold Storing Circuit (25) | Outlier Data Extraction Processing Circuit (26) | Type Determining Circuit (27) |
| Waveform Condition Selecting Circuit (28) | Abnormality Determination Processing Circuit (29) | Waveform Classifying Circuit (30) | Waveform Condition Generation Processing Circuit (31) | Waveform Condition Storing Circuit (32) | Detection Result Outputting Circuit (33) | |

# FIG. 3

```
    ⌐41                    ⌐42
┌──────────────┐    ┌──────────────┐
│   Memory     │    │   Processor  │
└──────┬───────┘    └──────┬───────┘
       │                   │
───────┴───────────────────┴──────────
```

# FIG. 4

```
              ┌──────────┐
              │  Start   │
              └────┬─────┘
                   ▼
┌────────────────────────────────────┐
│   Learning Data Inputting Unit Receives  │── ST1
│   Input of Learning Time-Series Data     │
└────────────────┬───────────────────┘
                 ▼
┌────────────────────────────────────┐
│     Outlier Score Calculating Unit       │── ST2
│   Calculates Learning Outlier Score      │
└────────────────┬───────────────────┘
                 ▼
┌────────────────────────────────────┐
│ Threshold Calculating Unit Calculates Threshold │── ST3
└────────────────┬───────────────────┘
                 ▼
┌────────────────────────────────────┐
│ Outlier Data Extraction Processing Unit Extracts │── ST4
│      Outlier Data from among Pieces of           │
│          Learning Time-Series Data               │
└────────────────┬───────────────────┘
                 ▼
┌────────────────────────────────────┐
│     Type Determining Unit Calculates     │── ST5
│      Waveform Type of Outlier Data       │
└────────────────┬───────────────────┘
                 ▼
┌────────────────────────────────────┐
│  Waveform Classifying Unit Classifies One or     │── ST6
│ More Pieces of Learning Outlier Data into Groups │
└────────────────┬───────────────────┘
                 ▼
┌────────────────────────────────────┐
│ Waveform Condition Generation Processing Unit    │── ST7
│       Generates Waveform Condition               │
│          Corresponding to Group                  │
└────────────────┬───────────────────┘
                 ▼
              ┌──────────┐
              │   End    │
              └──────────┘
```

# FIG. 5

```
                    ┌─────────────┐
                    │    Start    │
                    └─────────────┘
                           │
                           ▼
    ┌─────────────────────────────────────────────┐
    │  Abnormality Detection Data Inputting Unit    │
    │  Receives Input of Abnormality Detection      │──── ST11
    │          Time-Series Data                     │
    └─────────────────────────────────────────────┘
                           │
                           ▼
    ┌─────────────────────────────────────────────┐
    │   Outlier Score Calculating Unit Calculates   │
    │     Abnormality Detection Outlier Score       │──── ST12
    └─────────────────────────────────────────────┘
                           │
                           ▼
    ┌─────────────────────────────────────────────┐
    │    Outlier Data Extraction Processing Unit    │
    │  Extracts Outlier Data from among Pieces of   │──── ST13
    │    Abnormality Detection Time-Series Data     │
    └─────────────────────────────────────────────┘
                           │
                           ▼
    ┌─────────────────────────────────────────────┐
    │       Type Determining Unit Determines        │
    │        Waveform Type of Outlier Data          │──── ST14
    └─────────────────────────────────────────────┘
                           │
                           ▼
    ┌─────────────────────────────────────────────┐
    │   Waveform Condition Selecting Unit Selects   │
    │   Waveform Condition Corresponding to Group   │
    │  Including Learning Outlier Data That Has Been │──── ST15
    │  Searched for from among Waveform Conditions  │
    │     Corresponding to One or More Groups       │
    └─────────────────────────────────────────────┘
                           │
                           ▼
    ┌─────────────────────────────────────────────┐
    │  Abnormality Determination Processing Unit    │
    │  Determines Whether Equipment Is Operating    │
    │  Abnormally on the Basis of Collation Result  │──── ST16
    │       Between Waveform Condition and          │
    │          Waveform of Outlier Data             │
    └─────────────────────────────────────────────┘
                           │
                           ▼
    ┌─────────────────────────────────────────────┐
    │   Detection Result Outputting Unit Displays   │
    │  Determination Result Indicating Whether      │──── ST17
    │    Equipment Is Operating Abnormally on,      │
    │          for Example, Display                 │
    └─────────────────────────────────────────────┘
                           │
                           ▼
                    ┌─────────────┐
                    │     End     │
                    └─────────────┘
```

## FIG. 6A

## FIG. 6B

# FIG. 7A

Upper Peak Type

Absolute Value of Difference between Maximum Value and Minimum Value

# FIG. 7B

Lower Peak Type

Absolute Value of Difference between Maximum Value and Minimum Value

# FIG. 7C

Upper and Lower Peak Type

Absolute Value of Difference between Maximum Value and Minimum Value

# FIG. 7D

Transient Ascending Type

Absolute Value of Difference between Maximum Value and Minimum Value

# FIG. 7E

Transient Descending Type

Absolute Value of Difference between Maximum Value and Minimum Value

# FIG. 7F

Vibration Type

EP 3 879 370 B1

# FIG. 8

FIG. 9B

FIG. 9A

# FIG. 10A

Upper Limit Value $B_{upper}[t]$

Abnormality Detection
Outlier Data

Lower Limit Value
$B_{lower}[t]$

$t_s'$          $t_e'$

Time

# FIG. 10B

Upper Limit Value $B_{upper}[t]$

Abnormality Detection
Outlier Data

Lower Limit Value
$B_{lower}[t]$

$t_s'$          $t_e'$

Time

# FIG. 11

# FIG. 12

## FIG. 13

| Input Interface Circuit (21) | Input Interface Circuit (22) | Outlier Score Calculating Circuit (23) | Threshold Calculating Circuit (24) | Threshold Storing Circuit (25) | Outlier Data Extraction Processing Circuit (26) | Type Determining Circuit (27) |
|---|---|---|---|---|---|---|
| Waveform Condition Selecting Circuit (28) | Abnormality Determination Processing Circuit (29) | Waveform Classifying Circuit (30) | Waveform Condition Generation Processing Circuit (31) | Waveform Condition Storing Circuit (32) | Detection Result Outputting Circuit (33) | Selection Accepting Circuit (34) |

EP 3 879 370 B1

FIG. 14

FIG. 15

# FIG. 16

Learning Data Inputting Unit ~1

2~ Abnormality Detection Data Inputting Unit

Learning Time-Series Data

3

Abnormality Detection Time-Series Data

Outlier Score Calculating Unit

Learning Outlier Score

Outlier Data Extracting Unit

5

6

Threshold Calculating Unit → Threshold Storing Unit

Abnormality Detection Outlier Score

7

Outlier Data Extraction Processing Unit ~4

Learning Outlier Data

Abnormality Detection Outlier Data

Abnormality Determining Unit

Type Determining Unit

18

10

Waveform Condition Selecting Unit

13

11

Waveform Classifying Unit

Abnormality Determination Processing Unit

14

Waveform Condition Generation Processing Unit

15

Waveform Condition Storing Unit

8

19

Waveform Condition

Detection Result Outputting Unit

Waveform Condition Generating Unit ~12

## FIG. 17

| 21 | 22 | 23 | 24 | 25 | 26 | 35 |
|---|---|---|---|---|---|---|
| Input Interface Circuit | Input Interface Circuit | Outlier Score Calculating Circuit | Threshold Calculating Circuit | Threshold Storing Circuit | Outlier Data Extraction Processing Circuit | Type Determining Circuit |

| 28 | 29 | 30 | 31 | 32 | 36 |
|---|---|---|---|---|---|
| Waveform Condition Selecting Circuit | Abnormality Determination Processing Circuit | Waveform Classifying Circuit | Waveform Condition Generation Processing Circuit | Waveform Condition Storing Circuit | Detection Result Outputting Circuit |

EP 3 879 370 B1

## FIG. 18

EP 3 879 370 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018207350 A1

- JP 2013218725 A

**Non-patent literature cited in the description**

- **CHIN-CHIA MICHAEL YEH ; YAN ZHU ; LIUDMILA ULANOVA ; NURJAHAN BEGUM ; YIFEI DING ; HOANG ANH DAU ; DIEGO FURTADO SILVA ; ABDULLAH MUEEN ; EAMONN KEOGH.** Matrix Profile I: All Pairs Similarity Joins for Time Series: A Unifying View that Includes Motifs. *Discords and Shapelets,* 2016